# EUROPEAN PATENT APPLICATION

(11) **EP 4 697 254 A1**
(43) Date of publication of application: **18.02.2026**
(21) Application number: 24792766.8
(22) Date of filing: 19.04.2024
(51) Int. Cl.: G06Q 50/20, G06F 16/90, H04L 51/02

(54) **INFORMATION PROCESSING SYSTEM, INFORMATION PROCESSING METHOD, AND PROGRAM**

(30) Priority: 19.04.2023 JP 2023068460; 25.05.2023 JP 2023086484
(71) Applicant: AddNess Inc., Tokyo 160-0004 (JP)
(72) Inventor: MIKAMI, Kota, Tokyo 160-0004 (JP)
(74) Representative: Berggren Oy
(86) International application number: PCT/JP2024/015615
(87) International publication number: WO 2024/219495

(57) **Abstract**

The present invention enables a user to achieve personal goals more efficiently. In a CPU of a management server S200: a provision information acquisition unit 122 acquires provision information that can be provided to a user regarding a course the user can take in order to achieve a goal for which details have been prescribed; a designation information acquisition unit 124 acquires designation information for designating assistance information for assisting in taking the course; a first prompt generation unit 125 generates, on the basis of the designation information, a first prompt for executing processing for generating related information associated with the assistance information from the provision information; a related information generation unit 126 generates related information on the basis of the first prompt; a second prompt generation unit 127 generates, on the basis of the designation information and the related information, a second prompt for executing processing for generating assistance information; and an assistance information generation unit 128 generates the assistance information on the basis of the second prompt.

## Description

### TECHNICAL FIELD

The present invention relates to an information processing system, an information processing method, and a program.

### BACKGROUND ART

A technique is known that enables output of a process chart indicating a path of action until a user achieves an objective. As prior art, for example, there is one that outputs a consumption period of a milestone buffer for absorbing delay in a work period, and a progress rate of the work period, based on a work period and a progress in a plurality of work processes (see, for example, Patent Document 1) .

### Citation List

### Patent Documents

Patent Document 1: Japanese Unexamined Patent Application, Publication No. 2012-058867

### DISCLOSURE OF THE INVENTION

### Problems to be Solved by the Invention

However, in the prior art, a process chart is input by the user but the user must create the process chart. Creating an appropriate process chart requires knowledge and experience. Therefore, creating a process chart is not easy for many people. Accordingly, supporting the creation of a process chart to help the user more efficiently achieve an objective is considered important.

The present invention has been made in view of such a situation, and an object thereof is to support a user so that the user can more efficiently achieve an objective.

### Means for Solving the Problems

In order to achieve the above object, one aspect of the present invention is an information processing system, including: a provision information acquisition unit configured to acquire provision information that can be provided to a user in a course that can be taken by the user in order to achieve an objective of predetermined content; a designation information acquisition unit configured to acquire designation information that designates support information for supporting taking of the course; a first prompt generation unit configured to generate a first prompt for executing processing to generate related information associated with the support information from the provision information, based on the designation information; a related information generation unit configured to generate the related information, based on the first prompt; a second prompt generation unit configured to generate a second prompt for executing processing to generate the support information, based on the designation information and the related information; and a support information generation unit configured to generate the support information, based on the second prompt.

An information processing method and a program corresponding to the information processing system of the above aspect of the present invention are also provided as an information processing method and a program corresponding to the information processing system of one aspect of the present invention.

### Effects of the Invention

According to the present invention, it is possible to support a user so that the user can more efficiently achieve an objective.

### BRIEF DESCRIPTION OF THE DRAWINGS

FIG. 1 is a diagram illustrating an example of an overall configuration of an information processing system S100 according to a first embodiment;
FIG. 2 is a block diagram illustrating an example of a hardware configuration of a management server 1 according to the first embodiment;
FIG. 3 is a functional block diagram illustrating an example of a functional configuration in the management server 1;
FIG. 4 is a functional block diagram illustrating an example of a functional configuration in a user terminal 2 and an instructor terminal 3;
FIG. 5 is a flowchart illustrating an example of stem route generation processing;
FIG. 6 is a flowchart illustrating another example of stem route generation processing;
FIG. 7 is a flowchart illustrating an example of branch route generation processing;
FIG. 8 is a diagram illustrating a specific example of stem routes;
FIG. 9 is a diagram illustrating a specific example of a quick reference table including branch routes;
FIG. 10 is a diagram illustrating a specific example of information displayed in association with stem routes and branch routes included in the quick reference table;
FIG. 11 is a diagram illustrating an example of an overall configuration of an information processing system S200 according to a second embodiment;
FIG. 12 is a functional block diagram illustrating an example of a functional configuration in a management server 31;
FIG. 13 is a functional block diagram illustrating an example of a functional configuration in a generative AI processing device 6;
FIG. 14 is a flowchart illustrating an example of support information generation processing;
FIG. 15 is a diagram illustrating a specific example of a screen displayed on the user terminal 2 that uses a service to which the information processing system S200 is applied;
FIG. 16 is a diagram illustrating a specific example of provision information to be uploaded;
FIG. 17 is a diagram illustrating a specific example of provision information to be uploaded;
FIG. 18 is a diagram illustrating a specific example of provision information to be uploaded;
FIG. 19 is a diagram illustrating a specific example of provision information to be uploaded;
FIG. 20 is a diagram illustrating a specific example of support information generated by the generative AI processing device 6;
FIG. 21 is a diagram illustrating a specific example of support information generated by the generative AI processing device 6;
FIG. 22 is a diagram illustrating a specific example of support information generated by the generative AI processing device 6;
FIG. 23 is a diagram illustrating a specific example of support information generated by the generative AI processing device 6;
FIG. 24 is a diagram illustrating a specific example of support information generated by the generative AI processing device 6;
FIG. 25 is a diagram illustrating a specific example of support information generated by the generative AI processing device 6; and
FIG. 26 is a diagram illustrating a specific example of support information generated by the generative AI processing device 6.

### PREFERRED MODE FOR CARRYING OUT THE INVENTION

Hereinafter, the present embodiment will be described with reference to the drawings.

### [First Embodiment]

### <Information Processing System>

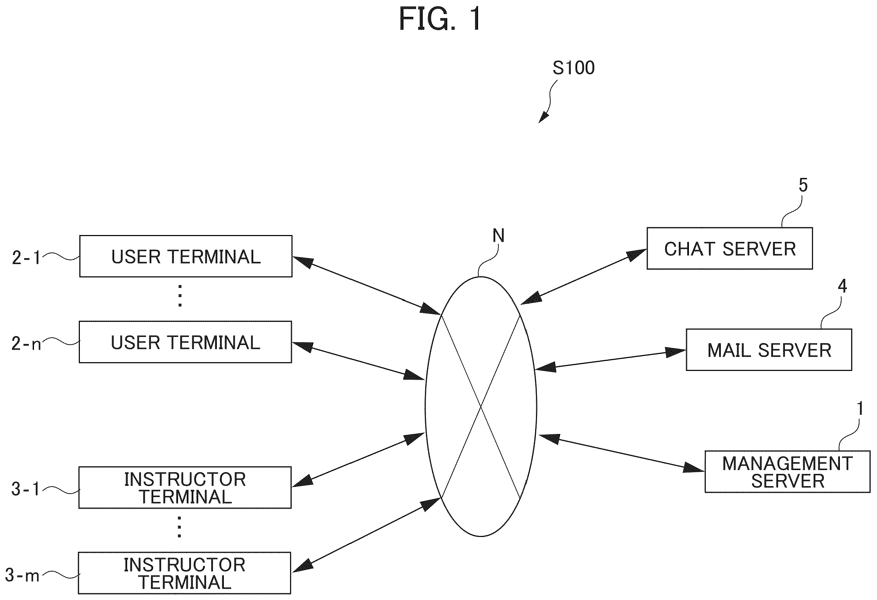

FIG. 1 is a diagram illustrating an example of an overall configuration of an information processing system S100 according to a first embodiment. The information processing system S100 includes a management server 1 configured to generate and present to a user a process chart including a route (hereinafter, referred to as a "stem route") that indicates a path of action until the user achieves an objective, based on information required for user registration including at least the user's objective (hereinafter, referred to as "user information"). The management server 1 identifies a difficult process (node) as a difficult stage for a user who takes an action along the stem route, and adds to the process chart at least one route (hereinafter, referred to as "branch route") that indicates detours for passing the difficult process. That is, the process chart indicates an optimal route for the user to achieve the objective by allowing the user to proceed along the stem route and, when the user encounters a difficult process, adding a branch route to bypass the difficult process.

A user to whom the process chart has been presented from the management server 1 starts an action along the stem route in order to achieve the user's objective using the process chart. Thereafter, even if the user reaches a difficult process and an action indicated at the difficult process is difficult, the user can pass through the difficult process by taking an action along the branch route of the process chart. Thus, the user can more easily achieve the objective by taking an action along the process chart. Furthermore, since a branch route is presented, self-help efforts of the user are supported. Therefore, a burden on a person in a position of instructing the user (hereinafter, referred to as an "instructor") is reduced.

The information processing system S100 is configured by connecting, via a network N, the management server 1, user terminals 2-1 to 2-n (n is an integer of 1 or greater), instructor terminals 3-1 to 3-m (m is an integer of 1 or greater), a mail server 4, and a chat server 5. The network N is, for example, the Internet, a LAN (Local Area Network), or the like. In a case where it is unnecessary to individually describe each of the user terminals 2-1 to 2-n, these may collectively be referred to as "user terminal 2". In a case where it is unnecessary to individually describe each of the instructor terminals 3-1 to 3-m, these may collectively be referred to as "instructor terminal 3".

### (Management Server)

The management server 1 acquires various types of information transmitted from the user terminal 2, the instructor terminal 3, the mail server 4, the chat server 5, and other external sources, and executes various types of processing. The management server 1 also transmits various types of information to the user terminal 2, the instructor terminal 3, the mail server 4, the chat server 5, and other external destinations.

For example, the management server 1 acquires, stores, and manages user information including at least a user's objective. The management server 1 also identifies and stores processes in which the user has taken actions along the process chart. The management server 1 is installed by a human resource development service company that provides a human resource development service for fostering personnel engaged in business, separately from schools and the like. The human resource development service company, for example, establishes at least one course for ordinary people as intended participants, and provides a human resource development service to the ordinary people who participate in the established course. Accordingly, the process chart is intended for participants who learn a course. In that case, a start line of the process chart is one assumed in the corresponding course. Hereinafter, the process chart will be referred to as a "quick reference table". It should be noted that the course is not particularly limited. An instructor is a person who has achieved the user's objective. The management server 1 acquires, stores, and manages information indicating records of a series of actions taken by the instructor to achieve the objective (hereinafter, referred to as "action record information"). The action record information may also be acquired from an achiever other than the instructor. The information may also be acquired from the instructor as well as an achiever other than the instructor.

The management server 1 generates a quick reference table including a stem route and a branch route, based on the action record information and the like. When generating the quick reference table, the management server 1 associates time information (hereinafter, referred to as "milestone") with at least one process in the stem route, the milestone being used as a reference for arrival or passage in a time series. The management server 1 presents the generated quick reference table to the user. A method of generating the quick reference table by the management server 1, and specific examples of the quick reference table generated by the management server 1, will be described later.

The management server 1 also identifies a difficult process for a user who takes an action along the stem route. When the difficult process is identified, the management server 1 generates a branch route for allowing the user to pass through the difficult process in the quick reference table including the stem route. Specific examples of the quick reference table in which a branch route has been generated will be described later.

The term "difficult process" refers to a process along the stem route that is estimated to be relatively difficult for a user to perform smoothly. A difficult process includes one that is considered common to most users and one that is specific to an individual user. Specifically, for example, a user who has many of the abilities required to achieve an objective has no or few difficult processes. However, a user who does not have many of the abilities required to achieve the objective is expected to have many difficult processes. Accordingly, the difficult processes can be broadly classified by focusing on the proportion of users for whom a process becomes a difficult process.

The management server 1 also updates the stem route included in the quick reference table at predetermined timings. Examples of the "predetermined timings" include a timing when a predetermined period has elapsed since generating the quick reference table including the stem route, a timing when contents of an inquiry from a user and an answer to the inquiry are reflected in the quick reference table, and a timing when it is determined that the branch route is preferable to the stem route as a path of action for achieving the user's objective. When it is determined that the current path of action is not preferable, a part of the stem route may be replaced with the branch route on the quick reference table. The management server 1 also stores and manages information indicating a history until the quick reference table including the stem route is generated (hereinafter, referred to as "generation history information"). The generation history information also includes information indicating an update history of the quick reference table.

The management server 1 also acquires and stores inquiry information (hereinafter, referred to as "inquiry information"), which is information indicating contents of an inquiry from a user who takes an action along the quick reference table. The inquiry information is text data, voice data, or video data indicating the contents of the inquiry. The management server 1 also transmits the acquired inquiry information to the instructor terminal 3 in accordance with the contents of the acquired inquiry information. The management server 1 then acquires answer information (hereinafter, referred to as "answer information"), which is information indicating contents of an answer from the instructor to the inquiry, and stores and manages the answer information in association with the inquiry information. The answer information is text data, voice data, or video data indicating the contents of the answer to the inquiry.

The management server 1 also identifies a difficult process for the user who made the inquiry, and as a response to the inquiry, adds to the quick reference table, as necessary, a branch route that allows the user to pass through the difficult process. Details of a specific configuration and processing of the management server 1 will be described later.

### (User Terminal)

The user terminal 2 is an information processing device operated by a user, and is configured, for example, by a personal computer, a tablet terminal, or a smartphone. The user terminal 2 is assumed to have installed dedicated application software (hereinafter, referred to as a "Next Action application") that enables use of the information processing system S100. Based on a user operation, the user terminal 2 activates the Next Action application, and executes various types of processing based on various types of information transmitted from the management server 1, the instructor terminal 3, and other external sources, and on information input by the user operation. The user terminal 2 also transmits various types of information to the management server 1, the instructor terminal 3, the mail server 4, the chat server 5, and other external destinations. It should be noted that it is not always necessary to prepare the dedicated application software to be installed on the user terminal 2.

For example, the user terminal 2 accepts input of user information, and transmits the input information to the management server 1. The user terminal 2 also receives and displays the quick reference table transmitted from the management server 1.

The user terminal 2 also accepts input of inquiry information, and transmits the input information to the management server 1. The user terminal 2 further acquires and displays the quick reference table including a branch route transmitted from the management server 1. Details of a specific configuration and processing of the user terminal 2 will be described later.

### (Instructor Terminal)

The instructor terminal 3 is an information processing device operated by an instructor, and is, for example, a personal computer, a tablet terminal, or a smartphone. The instructor terminal 3 executes various types of processing based on various types of information transmitted from the management server 1, the user terminal 2, and other external sources, and on information input by the instructor operation. The instructor terminal 3 also transmits various types of information to the management server 1, the user terminal 2, the mail server 4, the chat server 5, and other external destinations.

For example, the instructor terminal 3 receives and displays the quick reference table transmitted from the management server 1. The instructor terminal 3 also acquires and displays inquiry information transmitted via the management server 1. The instructor terminal 3 further transmits answer information input as a response to the inquiry from the user to the management server 1. The data format of the answer information is not particularly limited, and examples thereof include text data, voice data, and video data. Details of a specific configuration and processing of the instructor terminal 3 will be described later.

The mail server 4 is an information processing device that operates continuously to relay transmission and reception of electronic mail between the user terminal 2 and the instructor terminal 3, between the user terminal 2 and the management server 1, between the user terminals 2, between the instructor terminals 3, and the like.

The chat server 5 is an information processing device that operates continuously to enable each of a plurality of users and instructors to transmit and receive text messages and conduct conversations via the network N. The chat server 5 relays messages transmitted and received between users, between a user and the management server 1, between instructors, and between a user and an instructor.

The above-described processing executed by each of the management server 1, the user terminal 2, the instructor terminal 3, the mail server 4, and the chat server 5, which constitute the information processing system S100, is merely an example, and it is sufficient that the information processing system S100 as a whole has a function of realizing the above-described processing. Therefore, among the functions that realize the above-described processing, some or all may be shared or collaborated within the information processing system S100.

For example, a part or all of the functions of the management server 1 may be functions of another information processing device or the like in the information processing system S100, or a part or all of the functions of another information processing device or the like in the information processing system S100 may be functions of the management server 1. As a result, processing of the information processing system S100 as a whole is promoted, and processing can also be complemented.

### <Hardware Configuration>

### (Hardware Configuration of Management Server)

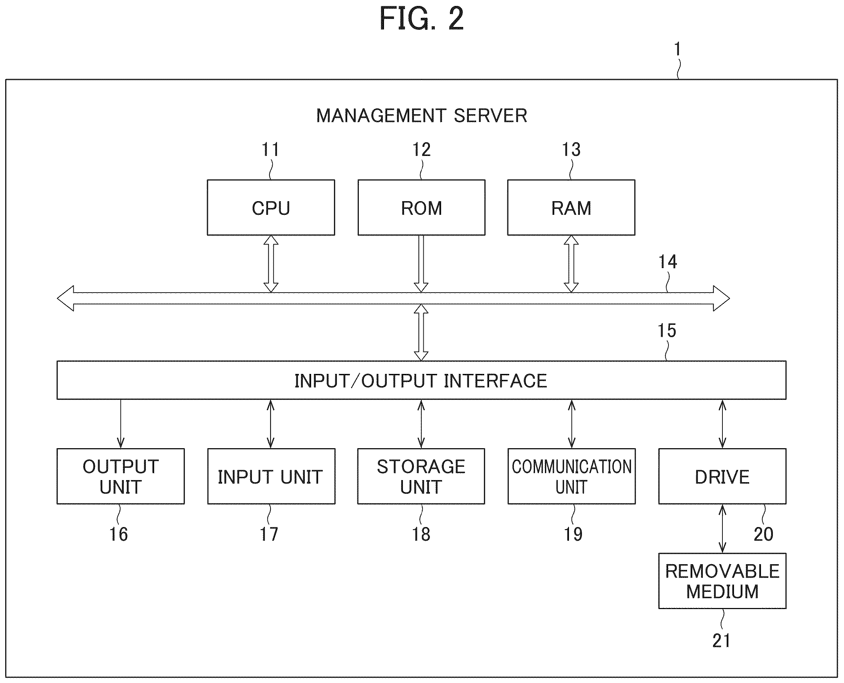

FIG. 2 is a block diagram illustrating an example of a hardware configuration of the management server 1 according to the first embodiment. The management server 1 includes a CPU (Central Processing Unit) 11, a ROM (Read Only Memory) 12, a RAM (Random Access Memory) 13, a bus 14, an input/output interface 15, an output unit 16, an input unit 17, a storage unit 18, a communication unit 19, and a drive 20.

The CPU 11 executes various types of processing in accordance with a program recorded in the ROM 12 or a program loaded from the storage unit 18 into the RAM 13. The RAM 13 appropriately stores data necessary for the CPU 11 to execute various types of processing. The CPU 11, the ROM 12, and the RAM 13 are connected to each other via the bus 14. The input/output interface 15 is also connected to the bus 14.

The input/output interface 15 is connected to the output unit 16, the input unit 17, the storage unit 18, the communication unit 19, and the drive 20. The output unit 16 is configured by a display, a speaker, or the like, and outputs various types of information as images or audio. The input unit 17 is configured by a keyboard, a mouse, a touch panel, or the like, and accepts input of various types of information. The storage unit 18 is configured by a hard disk, an SSD (Solid State Drive), or the like, and stores various types of data. The stored data includes an application developed to operate the information processing device as the management server 1 (hereinafter, referred to as a "development application") and an OS (Operating System). The application operates on the OS. The communication unit 19 enables communication with other devices via the network N including the Internet.

A removable medium 21, which is configured by a magnetic disk, an optical disk, a magneto-optical disk, a semiconductor memory, or the like, is mounted to the drive 20. A program read from the removable medium 21 by the drive 20 is installed in the storage unit 18 as necessary. The removable medium 21 can also store various types of data stored in the storage unit 18 in the same manner as the storage unit 18. The development application may be made installable in the management server 1 by being stored in the removable medium 21. The development application may also be transmitted and received via the network N. Therefore, the development application may be stored in a recording medium directly or indirectly accessible by another external information processing device.

### (Hardware Configuration of User Terminal, Instructor Terminal, Mail Server, and Chat Server)

Although not illustrated, the user terminal 2, the instructor terminal 3, the mail server 4, and the chat server 5 may each have the hardware configuration illustrated in FIG. 2. That is, each of the user terminal 2, the instructor terminal 3, the mail server 4, and the chat server 5 may have a CPU, a ROM, a RAM, a bus, an input/output interface, an output unit, an input unit, a storage unit, a communication unit, a drive, and a removable medium, which respectively correspond to the CPU 11, the ROM 12, the RAM 13, the bus 14, the input/output interface 15, the output unit 16, the input unit 17, the storage unit 18, the communication unit 19, the drive 20, and the removable medium 21 of FIG. 2. Here, it is assumed as such for convenience.

### <Functional Configuration>

### (Functional Configuration of Management Server)

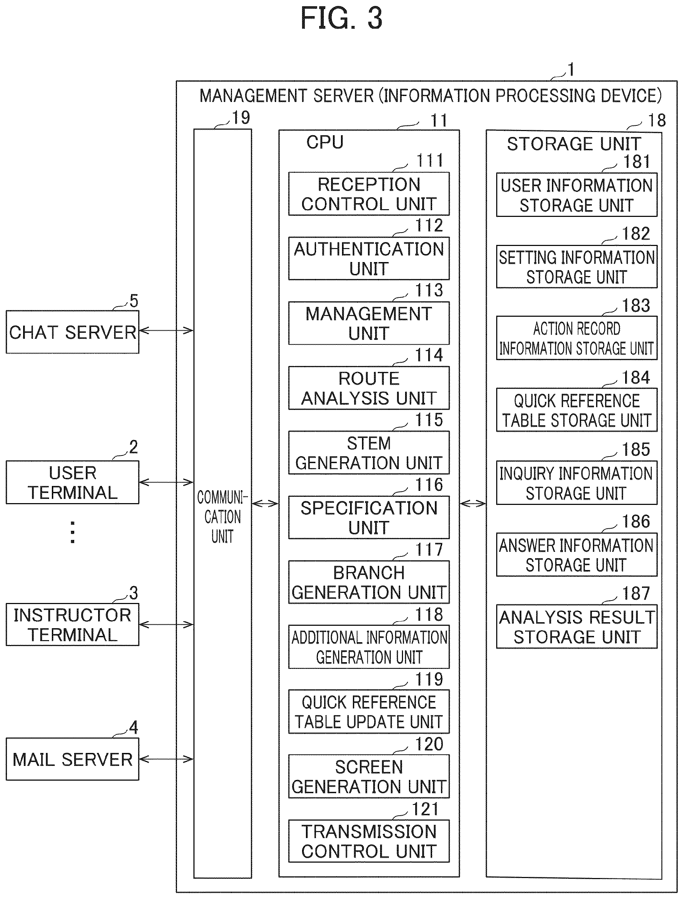

FIG. 3 is a functional block diagram illustrating an example of a functional configuration in the management server 1. When operating, the CPU 11 of the management server 1 functions as a reception control unit 111, an authentication unit 112, a management unit 113, a route analysis unit 114, a stem generation unit 115, a specification unit 116, a branch generation unit 117, an additional information generation unit 118, a quick reference table update unit 119, a screen generation unit 120, and a transmission control unit 121. In the storage unit 18 of the management server 1, a user information storage unit 181, a setting information storage unit 182, an action record information storage unit 183, a quick reference table storage unit 184, an inquiry information storage unit 185, an answer information storage unit 186, and an analysis result storage unit 187 are secured for storing information.

The reception control unit 111 processes various types of information received by the communication unit 19. The reception control unit 111, for example, specifies a type of received information, determines a destination to which the information should be delivered in accordance with the specification result, and delivers the information. As a result, the user information, inquiry information, various types of setting information, action record information, and answer information transmitted for user registration are delivered to the management unit 113, and stored in the user information storage unit 181, the inquiry information storage unit 185, the setting information storage unit 182, the action record information storage unit 183, and the answer information storage unit 186 secured in the storage unit 18, respectively. Accordingly, the management unit 113 mainly performs information management. The user information, the login information, and the inquiry information are transmitted from the user terminal 2, and the various types of setting information, the action record information, and the answer information are transmitted from the instructor terminal 3.

The user information is an information group including, for example, user identification information (hereinafter, referred to as a "user ID"), course identification information of a course in which the user participates (hereinafter, referred to as a "course ID"), personal information of the user, login information, progress information of the course, and the like. Each process (node) of the quick reference table is also assigned identification information (hereinafter, referred to as a "process ID"). Accordingly, the progress information includes a process ID of a process that the user has most recently completed or a process to which the user is currently transitioning. Such a process can be specified from content viewed by the user by setting content to be viewed for each process. The progress information may indicate an action history, such as a process in which the user has taken an action, and a date and time when the user has transitioned to the process.

The inquiry information is information transmitted, for example, via the chat server 5. The answer information is also information transmitted, for example, via the chat server 5. They may also be transmitted directly to the management server 1. In such a case, the management server 1 relays the information. The setting information includes, for example, update trigger information of the quick reference table, example information of process division, defect information indicating examples of defects according to contents of processes, and designation creation information for designating a method of creating the quick reference table. These are all examples of setting information related to creation of the quick reference table. The action record information is information indicating a series of actions (route) taken by an instructor to achieve a user's objective, that is, an objective of a course.

When the communication unit 19 receives login information, the login information is delivered, for example, from the reception control unit 111 to the authentication unit 112. The authentication unit 112 confirms whether a user who has transmitted the login information is a registrant, by referencing user information stored in the user information storage unit 181 using the delivered login information. The confirmation result is notified to the screen generation unit 120. Accordingly, the screen generation unit 120 generates a screen according to the confirmation result and delivers the generated screen to the transmission control unit 121. As a result, the screen generated by the screen generation unit 120 is transmitted via the communication unit 19 to the user terminal 2 that has transmitted the login information. Through such authentication, a correspondence between a registered user and the user terminal 2 used by the user is specified. As a result, a user who has transmitted any information is specified from the user terminal 2 that has transmitted the information.

The inquiry information is transmitted, for example, by enabling transmission of inquiry information related to a process in which a user has transitioned, or by inputting information designating a process to be inquired about (for example, a process ID or a process name). Therefore, the inquiry information includes, in addition to a user ID that has transmitted the inquiry information, a course ID, text data of the inquiry, and identification information assigned to the inquiry information (hereinafter, referred to as an "inquiry ID"), as well as the course ID and the process ID. The management unit 113 assigns an inquiry ID to the received inquiry information and stores it in the inquiry information storage unit 185. The management unit 113 also instructs, for example, the screen generation unit 120 or the transmission control unit 121 to execute processing for notifying an instructor using the instructor terminal 3 of the existence of inquiry information to be answered. For example, the transmission control unit 121 may be instructed to transmit a message transmitted via the chat server 5.

The instructor checks the inquiry information by the instructor terminal 3 and transmits an answer message as answer information. The answer information received by the management server 1 is assigned instructor identification information (hereinafter, referred to as an "instructor ID") by the management unit 113, and is stored in the answer information storage unit 186 together with the instructor ID. The answer information also includes an inquiry ID assigned to the inquiry information. Accordingly, a correspondence between the inquiry information and the answer information can be specified.

The route analysis unit 114 specifies, as a route, a series of actions actually taken by an instructor to achieve an objective for each stored piece of action record information, analyzes the specified route, and specifies relationships among the routes. Here, the action record information is information of an instructor, but as described above, the action record information may be information of an achiever other than the instructor, or may be a mixture of information of both the instructor and an achiever other than the instructor. For example, the route analysis unit 114 extracts a shortest route with the smallest number of processes among the routes, extracts a process common to all routes or common with a high ratio, extracts a process at which branching occurs, and calculates transition ratios between processes (including branching ratios). Further, a process with a very high commonality ratio is considered important compared with other processes, and time information indicating a timing that serves as a guide for completing the process is specified as a milestone. These are stored in the analysis result storage unit 187 secured in the storage unit 18 as analysis results. When the action record information is descriptive text describing each process in sentences, the route analysis unit 114 may extract each process and a flow thereof from the sentences by an AI function.

The stem generation unit 115, the specification unit 116, and the branch generation unit 117 refer to the analysis results stored in the analysis result storage unit 187, and generate a stem route, specify a difficult process, and generate a branch route, respectively. These units and the route analysis unit 114 actually function in accordance with contents of the designated generation information stored as the setting information.

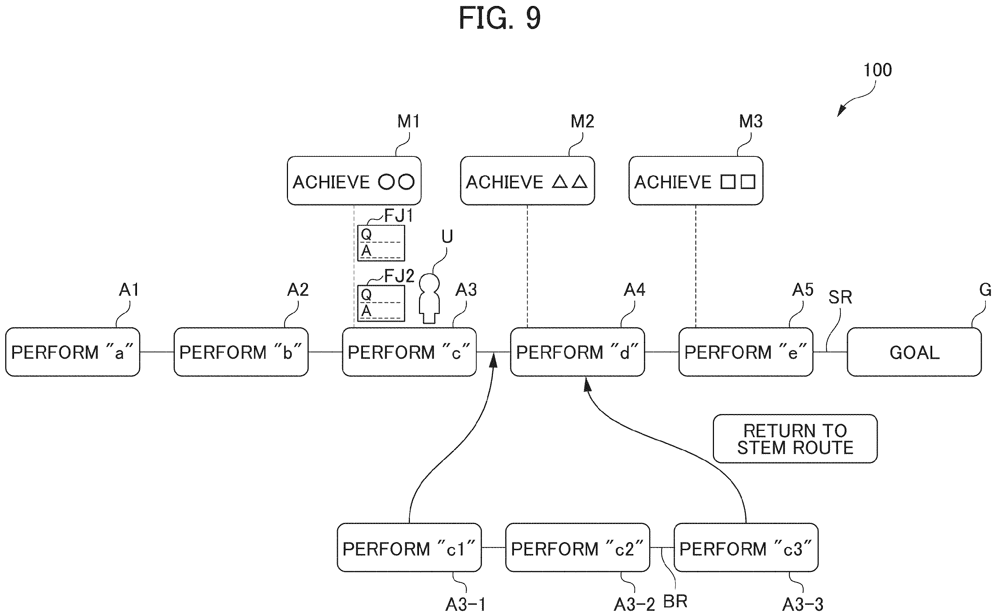

The inquiry information and the answer information are useful information for many users who take actions along the quick reference table. Accordingly, in the first embodiment, these are made viewable by other users as well. In order to make the existence of such information more easily visible, the existence thereof is indicated on the process chart. The additional information generation unit 118 generates, as additional information, information indicating the existence of the inquiry information and the answer information, and adds the information to the quick reference table. FIG. 9, which will be described later, illustrates an example in which two pieces of additional information FJ1 and FJ2, which are link buttons for accessing the inquiry information and the answer information, are added to the quick reference table. When such link buttons are arranged in the quick reference table as the additional information FJ1 and FJ2, data formats of the inquiry information and the answer information are not particularly limited. However, in order to confirm the contents more quickly and more accurately, it is preferable that the contents be viewable as text data. By making the inquiry information and the answer information viewable, the same type of inquiry can be avoided. Therefore, the burden on the instructor is reduced.

A process for which inquiry information has been transmitted means that there are users who have questions in the process or find the process difficult to understand. Accordingly, in the first embodiment, the process for which inquiry information has been transmitted is regarded as a difficult process, and the quick reference table is updated by generating a branch route or dividing, that is, subdividing, the difficult process based on the contents of the difficult process or the inquiry contents. The quick reference table is updated as such, under the management of the management unit 113.

The management unit 113, for example upon receipt of the answer information, confirms the contents of the inquiry information and the answer information, and determines whether the quick reference table needs to be updated. This determination may be made using AI. When it is determined that the quick reference table needs to be updated, the management unit 113 instructs the quick reference table update unit 119 to generate a branch route assuming the difficult process, or to subdivide the difficult process. Accordingly, the quick reference table update unit 119 generates a branch route, subdivides the difficult process, or the like, according to the instruction, and updates the quick reference table. The difficult process may be not only a process on the stem route but also a process on an existing branch route. The quick reference table is updated as such, with reference to necessary setting information.

There are often fine differences among the routes actually taken by each instructor. Therefore, the branch routes generated by the branch generation unit 117 usually do not cover all the routes. Focusing on this, the generation of branch routes and the subdivision of difficult processes may be performed by extracting useful routes from among the routes specified by the route analysis unit 114, and by referring to the extracted routes. For example, the generation of branch routes or the subdivision of difficult processes may be performed by referring to countermeasures for similar processes in other process charts, or by specifying types of knowledge required in the difficult process. It is also possible to update the quick reference table by a method other than generating branch routes or subdividing difficult processes. For example, information presenting reference material, checklists, or the like may be added.

For example, in a case where priority is placed on making the quick reference table more desirable for most users, the quick reference table may be updated by replacing a part of the stem route with a branch route. The quick reference table can be updated as such, by monitoring transitions between processes and calculating transition ratios for each process-to-process transition. When action record information indicates material (books, videos, or the like) referred to by an instructor, such material may be used as reference material. The reference material may also be selected from material prepared in advance.

By creating a quick reference table, less knowledge and experience are required for preparing a process chart. By confirming undesirable parts and correcting necessary parts in the created quick reference table, a quick reference table to be presented to users can be created. Accordingly, the burden of creating a quick reference table is greatly reduced. Furthermore, by such updating of the quick reference table, the quick reference table becomes more user-friendly. Therefore, more users can more easily take actions along the processes in the quick reference table.

### (Functional Configuration of User Terminal and Instructor Terminal)

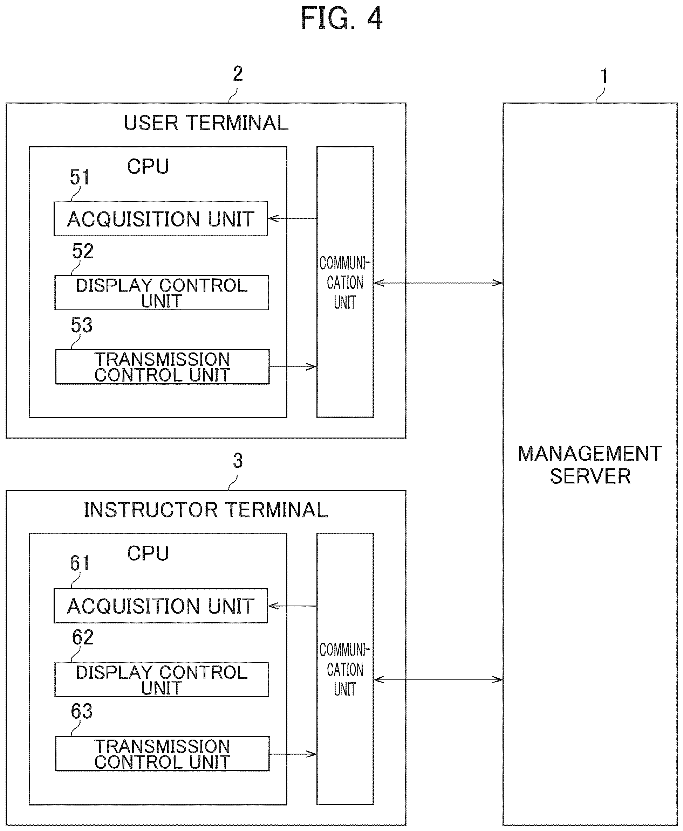

FIG. 4 is a functional block diagram illustrating an example of a functional configuration in the user terminal 2 and the instructor terminal 3.

### [Functional Configuration of User Terminal]

When operating, the CPU of the user terminal 2 functions as an acquisition unit 51, a display control unit 52, and a transmission control unit 53.

The acquisition unit 51 acquires various types of information. For example, the acquisition unit 51 acquires input information accepted by an input unit. For example, the acquisition unit 51 acquires user information for which input has been accepted. The acquisition unit 51 also acquires inquiry information for which input has been accepted. The acquisition unit 51 acquires various types of information transmitted from the management server 1, the instructor terminal 3, the mail server 4, the chat server 5, and other external sources. For example, the acquisition unit 51 acquires the quick reference table transmitted from the management server 1. In this manner, the acquisition unit 51 handles information input by the input unit and information reception by the communication unit.

The display control unit 52 controls displaying of various types of information on a display of the output unit or the like. For example, the display control unit 52 controls displaying of the quick reference table on a display of the output unit or the like. The display control unit 52 also controls displaying of the answer information on a display of the output unit or the like.

The transmission control unit 53 controls transmission of various types of information via the communication unit to the management server 1, the mail server 4, the chat server 5, and other external destinations. For example, the transmission control unit 53 controls transmission of the action record information to the management server 1. The transmission control unit 53 also controls transmission of the inquiry information to the management server 1, the mail server 4, or the chat server 5.

### [Functional Configuration of Instructor Terminal]

When operating, the CPU of the instructor terminal 3 functions as an acquisition unit 61, a display control unit 62, and a transmission control unit 63.

The acquisition unit 61 acquires various types of information. For example, the acquisition unit 61 acquires input information accepted by an input unit. For example, the acquisition unit 61 acquires answer information for which input has been accepted. The acquisition unit 61 also acquires various types of information transmitted from the management server 1, the user terminal 2, the mail server 4, the chat server 5, and other external sources. For example, the acquisition unit 61 acquires inquiry information transmitted directly or indirectly from the management server 1. In this manner, the acquisition unit 61 handles information input by the input unit and information reception by the communication unit.

The display control unit 62 controls displaying of various types of information on a display of the output unit or the like. For example, the display control unit 62 controls displaying of the quick reference table on a display of the output unit or the like. The display control unit 62 also controls displaying of the inquiry information on a display of the output unit or the like.

The transmission control unit 63 controls transmission of various types of information via the communication unit to the management server 1, the mail server 4, the chat server 5, and other external destinations. For example, the transmission control unit 63 controls transmission of the action record information to the management server 1. The transmission control unit 63 also controls transmission of the answer information to the management server 1, the mail server 4, or the chat server 5.

### <Processing Flow>

### (Processing Flow of Management Server)

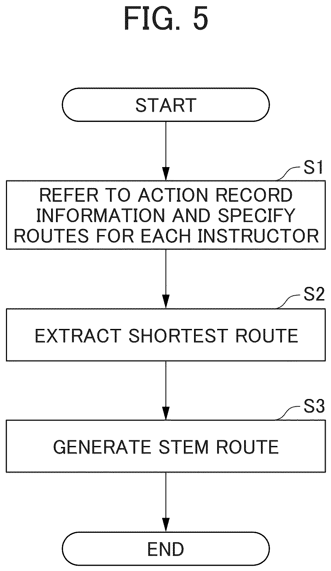

FIG. 5 is a flowchart illustrating an example of stem route generation processing. This processing realizes the route analysis unit 114 and the stem generation unit 115. The CPU 11 of the management server 1 refers to action record information stored in the action record information storage unit 183, and specifies a route for each instructor (Step S1). Next, the CPU 11 extracts the shortest route among the specified routes (Step S2). Thereafter, the CPU 11 generates a stem route along the shortest route (Step S3). After generating the stem route, the stem route generation processing ends.

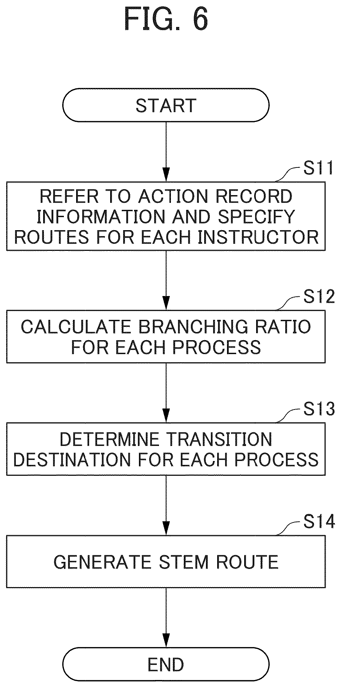

The stem route generation processing illustrated in FIG. 5 is a case where generation of the stem route along the shortest route is designated by designated generation information. The contents of the stem route generation processing vary according to the designation contents of the designated generation information. FIG. 6 is a flowchart illustrating another example of stem route generation processing. This generation processing is a case where branching ratios are calculated, and processes constituting the stem route are selected according to the calculated branching ratios. By calculating the branching ratios, it is possible to generate a stem route with contents more desirable for a larger number of users.

The CPU 11 refers to action record information stored in the action record information storage unit 183, and specifies a route for each instructor (Step S11). Next, the CPU 11 calculates a branching ratio for each branching destination for each process included in the specified route (Step S12). Then, the CPU 11 determines a transition destination for each process from the calculated branching ratios (Step S13). Next, the CPU 11 generates a stem route in a manner that connects the determined processes (Step S14). After generating the stem route, the stem route generation processing ends.

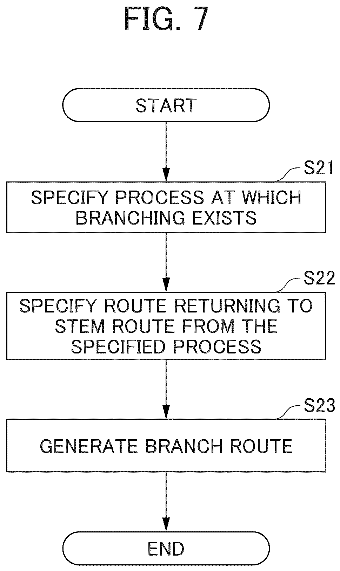

FIG. 7 is a flowchart illustrating an example of branch route generation processing. The CPU 11 compares the routes specified for each instructor and specifies a process on the stem route at which branching exists (Step S21). Next, the CPU 11 refers to routes branching from the specified process, and among the referred routes, specifies a route returning from the specified process to the stem route (Step S22). Then, the CPU 11 generates a branch route along the specified route (Step S23). The branch route is usually generated for each process specified as having a branching point.

### <Specific Example>

### (Specific Example of Quick Reference Table)

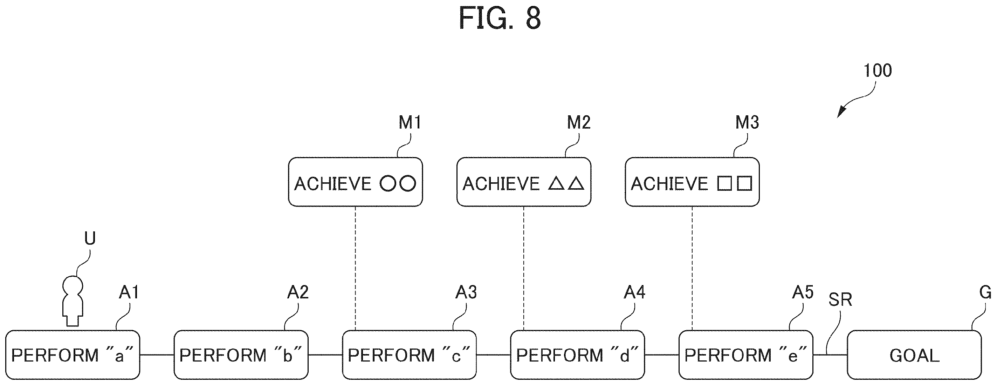

FIG. 8 is a diagram illustrating a specific example of a stem route. When the user operates the user terminal 2 and downloads the quick reference table from the management server 1, for example, a quick reference table 100 including a stem route SR is displayed, as illustrated in FIG. 8. In the stem route SR, processes A1 to A5 representing actions to be taken by the user are connected in time series as a main path of action until the user achieves an objective G. In the stem route SR, milestones M1 to M3 serving as time-based passage targets are associated with each process positioned as important. An object U for indicating a current position of the user is also displayed on the stem route SR. By simply viewing the displayed object U, the user can easily grasp the path taken so far, the current position, the next action to be taken, and the future path of action.

Specifically, the process A1 is labeled "Perform a". The process A2 is labeled "Perform b". The process A3 is labeled "Perform c". The process A4 is labeled "Perform d". The process A5 is labeled "Perform e". The milestone M1 is labeled "Achieve OO". The milestone M2 is labeled "Achieve ΔΔ". The milestone M3 is labeled "Achieve [][]". The user can achieve the objective G by completing the processes A1 to A5 in this order, while using the milestones M1 to M3 labeled on A3 to A5 of the stem route SR as passage targets.

### (Specific Example of Branch Route)

FIG. 9 is a diagram illustrating a specific example of a quick reference table including a branch route. As described above, the user can efficiently achieve the objective by taking actions along the stem route included in the quick reference table. However, when the user encounters a difficult process, a branch route for allowing the user to pass through the difficult process is added. FIG. 9 illustrates an example in which the process A3 among the processes A1 to A5 associated with the stem route SR included in the quick reference table 100 is determined to be a difficult process for the user. Accordingly, in the quick reference table illustrated in FIG. 9, a branch route BR for allowing the user to pass through the process A3 is added. Further, in the process A3 for which an inquiry was made, additional information FJ1 and FJ2 are arranged.

In the branch route BR for passing through the process A3, the processes A3-1 to A3-3, in which the user should take actions to pass through the process A3, are associated in time series. Specifically, the process A3-1 is labeled "Perform c1". The process A3-2 is labeled "Perform c2". The process A3-3 is labeled "Perform c3". The user can efficiently pass through the process A3 by completing the subdivided processes A3-1 to A3-3 for passing through the process A3. That is, the user can return from the branch route BR to the stem route SR and transition to the subsequent processes. Thereafter, the user can achieve the objective G by completing the processes A4 and A5.

However, in taking actions along the branch route BR, the user may encounter another difficult process. In such a case, although not illustrated, a subdivided branch route in which the branch route BR is subdivided is generated. Furthermore, in taking actions along the subdivided branch route of the branch route BR, the user may encounter another difficult process. In such a case, a further subdivided branch route is generated. By performing such updates, a quick reference table in which all or most users can eventually reach the objective G is created.

### (Specific Example of Information Displayed in Quick Reference Table)

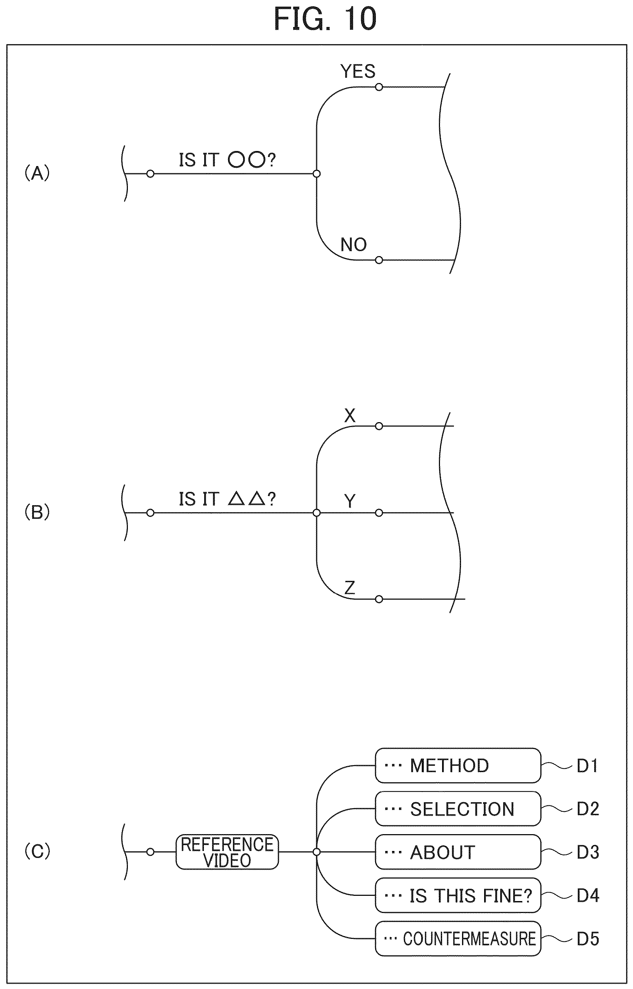

FIGS. 10(A) to 10(C) are diagrams illustrating specific examples of information displayed in association with stem routes and branch routes included in the quick reference table. The stem routes and branch routes basically proceed from left to right. FIGS. 8 and 9 described above illustrate simplified display modes to explain outlines of functions of stem routes and branch routes included in the quick reference table; however, various types of information can be displayed in association with the stem routes and the branch routes, as illustrated in FIGS. 10(A) to 10(C).

For example, the stem routes and branch routes can be branched by choices. FIG. 10(A) illustrates an example in which the stem route or the branch route is branched into two according to "Yes" and "No" as choices for a question "Is it OO?". FIG. 10(B) illustrates an example in which the stem route or the branch route is branched into three according to "X", "Y", and "Z" as choices for a question "Is it ΔΔ?".

For example, data viewable or playable by the user (for example, text data, voice data , video data, or the like) can be displayed in association with processes of the stem routes and branch routes. The data viewable or playable by the user may be data prepared in advance on the management server 1 side as reference for taking actions along the stem routes and branch routes, or may be inquiry information from the user, or answer information from the instructor or the system side. FIG. 10(C) illustrates an example in which five video data items D1 to D5 branched from a label "Reference Video" are displayed in association with processes on the stem route or the branch route in a mode downloadable for viewing.

### <Advantageous Effects of the First Embodiment>

According to the first embodiment, even if the user reaches a difficult process in taking actions along the stem route included in the quick reference table, the user can pass through the difficult process efficiently without hesitation and achieve the objective by taking actions along the generated branch route. In addition, since contents of inquiries from the user and contents of answers to the inquiries are reflected in the stem routes and the branch routes included in the generated quick reference table, the stem routes and branch routes are refined, and the contents of the quick reference table can be made more desirable. Adding branch routes, subdividing processes, appending information such as reference material or checklists, or replacing a part of the stem route with a branch route are all effective in making the contents of the quick reference table more desirable.

### [Second Embodiment]

The information processing system according to the first embodiment supports achievement of a user's objective by creating a quick reference table including a stem route that indicates a path of action until the user achieves the objective, based on user information required for user registration including at least the user's objective, and by refining the quick reference table. In contrast, the information processing system according to the second embodiment supports achievement of a user's objective more suitably by utilizing a predetermined AI model together with the quick reference table.

Conventionally, when instructed to generate information by a predetermined prompt, a generative AI can search information considered necessary for generation from a predetermined database. The generative AI then treats the retrieved information as correct and generates an answer within the range of that information. There are many services that utilize such a function of generative AI.

Even when detailed instructions are given to a generative AI using a prompt, if the instructions include a plurality of large processes, accuracy of each process decreases, and the generative AI may generate final information by treating information from the prepared predetermined database as correct information.

For example, even when detailed instructions are given to perform a process of summarizing a large amount of information into organized information and a process of generating an answer based on the organized information, accuracy of the answer may be insufficient. Specifically, the prompt includes an instruction to structurally organize information retrieved from a predetermined database, and an instruction to create a quick reference table including a stem route that indicates a path of action until the user achieves the objective, based on the structurally organized information. In such a case, the generative AI may generate final information by adopting part of the information retrieved from a predetermined database as correct, without structurally organizing the retrieved information. That is, accuracy of the created quick reference table is not sufficient.

Therefore, in the second embodiment, by utilizing the generative AI more appropriately, generation of more accurate final information (hereinafter, referred to as "support information") is enabled.

In the following, in the second embodiment, description will be given on the assumption of using a generative AI model, in which a large language model (LLM) is employed as a predetermined AI model. The generative AI model is an AI model capable of outputting new data or information based on data learned by a computer. When a prompt (character string) using natural language is input into a language model, the language model can output a character string based on the input prompt and contexts such as prompts previously input and output. In particular, a large language model is one in which factors such as "computational amount", "data amount", and "number of model parameters" are scaled up among language models, thereby improving answer accuracy indicating quality of answers and precision in appropriately meeting a requester's demand. As described above, in the second embodiment, description is given on the assumption that a large language model is employed, but the invention is not limited thereto, and a language model using a predetermined natural language may be employed.

In processing using a large language model, prompt engineering is performed to obtain a more suitable output character string or to specify an output format. That is, instead of simply using a question sentence or a request sentence as a prompt, prompt engineering embeds information such as premises, constraints, and specification of an output format, thereby making contents of the output character string more suitable.

### <Information Processing System>

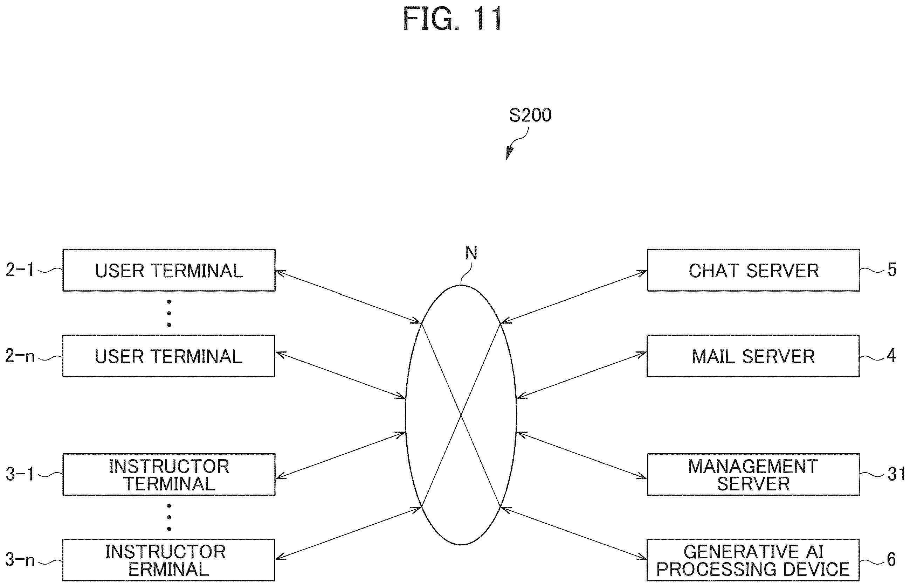

FIG. 11 is a diagram illustrating an example of an overall configuration of an information processing system S200 according to the second embodiment. The information processing system S200 is configured by connecting, via the network N, the management server 31, the user terminals 2-1 to 2-n, the instructor terminals 3-1 to 3-m, the mail server 4, the chat server 5, and a generative AI processing device 6. Hereinafter, points different from the first embodiment will be described, including configurations of the management server 31 and the generative AI processing device 6.

### (Management Server)

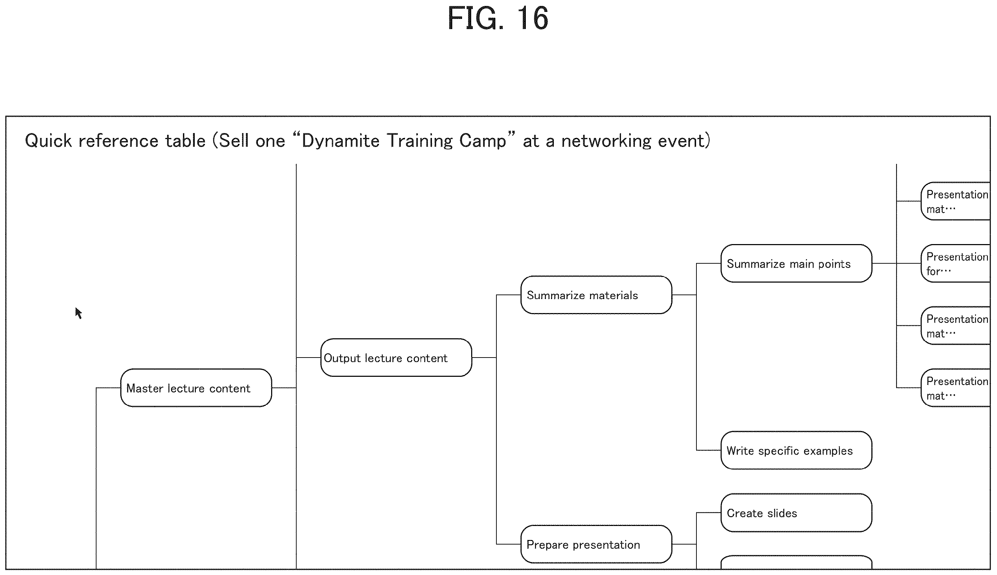

The management server 31 has, in addition to the functions of the management server 1 described above, the following functions. That is, the management server 31 acquires, stores, and manages information that can be provided to a user in a course that can be taken by the user in order to achieve an objective of predetermined content (hereinafter, referred to as "provision information"). The provision information includes, for example, information on teaching material used in the course, information on a current action of the user, information on a past action of the user, and information on a background of the user. Specifically, for example, teaching material and supplementary material used in the course, action examples of a current quick reference table, past questions and answers thereto, and past chat contents are acquired as provision information. Specific examples of the provision information will be described later with reference to FIGS. 16 to 19.

The management server 31 also acquires, stores, and manages information (hereinafter, referred to as "designation information") for designating information (hereinafter, referred to as "support information") for supporting taking of the course. The support information includes a quick reference table, a refined quick reference table, answers to questions, processes, hints, self-check points, and advice for self-check points. The designation information includes generation of the quick reference table, refinement of the quick reference table, generation of answers to questions, generation of processes, generation of hints, generation of self-check points, and generation of advice for self-check points.

Based on the acquired designation information, the management server 31 generates a prompt (hereinafter, referred to as a "first prompt") for executing processing to generate information (hereinafter, referred to as "related information") related to the support information from the provision information. The management server 31 causes the generative AI processing device 6 to execute processing to generate the related information based on the first prompt.

Here, the processing to generate the related information from the provision information based on the acquired designation information includes processing to structure the provision information. The first prompt includes matters to be considered for structuring the provision information. The structured information includes information that is comprehensive and de-duplicated. That is, the structured related information is obtained. In other words, the structured related information is generated from unorganized and duplicate-rich provision information.

The management server 31 also generates a prompt (hereinafter, referred to as a "second prompt") for executing processing to generate support information based on the acquired designation information and the generated related information. The management server 31 causes the generative AI processing device 6 to execute processing to generate the support information based on the second prompt. The management server 31 acquires the generated support information and provides the information to the user. That is, in the second embodiment, unlike conventional generative AI that merely generates support information by referring to provision information, related information associated with the support information is generated from the provision information, and the support information is generated based on the related information. As a result, accuracy of the generated support information is improved, enabling the user to efficiently achieve the objective.

The management server 31 also generates a prompt (hereinafter, referred to as a "third prompt") for executing processing to generate structured provision information, which is provision information structured based on the acquired provision information (hereinafter, referred to as "structured provision information"). The management server 31 causes the generative AI processing device 6 to execute processing to generate the structured provision information based on the third prompt. The management server 31 also generates the first prompt for executing processing to generate the related information from the structured provision information. Accordingly, since structured provision information structured from the provision information is generated, duplicate information such as frequently asked questions from users and answers thereto is eliminated from the provision information. As a result, accuracy of the related information generated based on the first prompt is further improved. Specific configurations and processing of the management server 1 will be described later.

### (Generative AI Processing Device)

The generative AI processing device 6 has a large language model and executes generative AI processing based on prompts, which are instructions from the management server 31, and transmits results thereof to the management server 31. Specifically, the generative AI processing device 6 executes generative AI processing based on the first prompt as an instruction from the management server 31, generates related information as a result, and transmits the related information to the management server 31. The generative AI processing device 6 also executes generative AI processing based on the second prompt as an instruction from the management server 31, generates support information as a result, and transmits the support information to the management server 31. The generative AI processing device 6 further executes generative AI processing based on the third prompt as an instruction from the management server 31, generates structured provision information as a result, and transmits the structured provision information to the management server 31. Specific configurations and processing of the generative AI processing device 6 will be described later.

### <Hardware Configuration>

### (Hardware Configuration of Management Server and Generative AI Processing Device)

Although not illustrated, the management server 31 and the generative AI processing device 6 may each have the hardware configuration illustrated in FIG. 2. That is, each of the management server 31 and the generative AI processing device 6 may have a CPU, a ROM, a RAM, a bus, an input/output interface, an output unit, an input unit, a storage unit, a communication unit, a drive, and a removable medium, which respectively correspond to the CPU 11, the ROM 12, the RAM 13, the bus 14, the input/output interface 15, the output unit 16, the input unit 17, the storage unit 18, the communication unit 19, the drive 20, and the removable medium 21 of FIG. 2. In the second embodiment, it is assumed as such for convenience.

### <Functional Configuration>

### (Functional Configuration of Management Server)

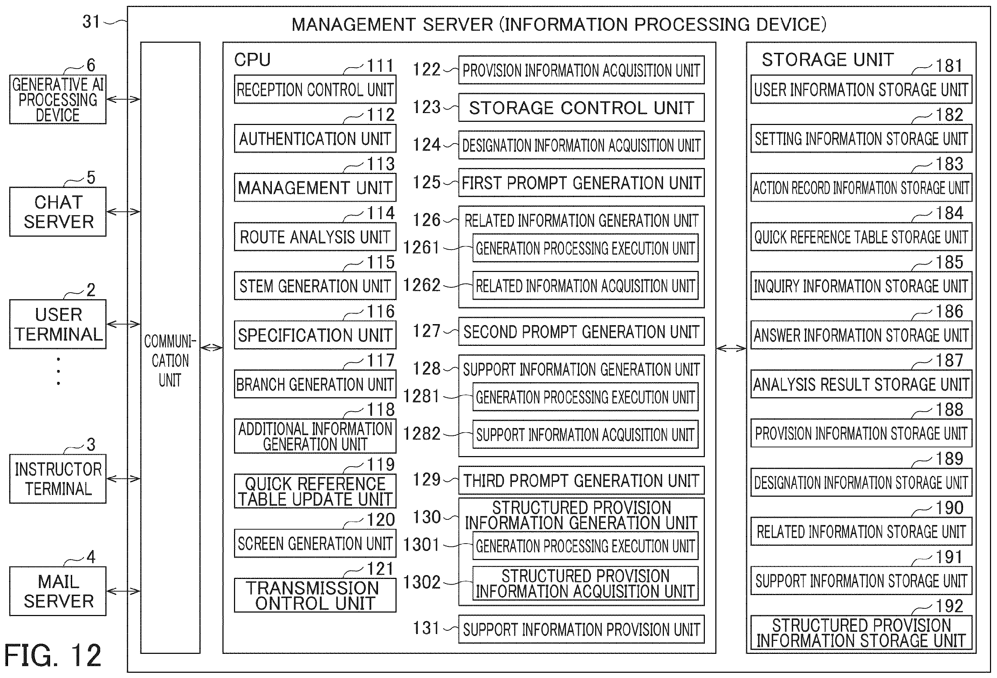

FIG. 12 is a functional block diagram illustrating an example of a functional configuration in the management server 31. When operating, the CPU of the management server 31 functions as the functional configuration illustrated in FIG. 3 (reception control unit 111, authentication unit 112, management unit 113, route analysis unit 114, stem generation unit 115, specification unit 116, branch generation unit 117, additional information generation unit 118, quick reference table update unit 119, screen generation unit 120, and transmission control unit 121), and further functions as a provision information acquisition unit 122, a storage control unit 123, a designation information acquisition unit 124, a first prompt generation unit 125, a related information generation unit 126, a second prompt generation unit 127, a support information generation unit 128, a third prompt generation unit 129, a structured provision information generation unit 130, and a support information provision unit 131.

In the storage unit of the management server 31, in addition to the functional configuration illustrated in FIG. 3 (user information storage unit 181, setting information storage unit 182, action record information storage unit 183, quick reference table storage unit 184, inquiry information storage unit 185, answer information storage unit 186, and analysis result storage unit 187), a provision information storage unit 188, a designation information storage unit 189, a related information storage unit 190, a support information storage unit 191, and a structured provision information storage unit 192 are secured for storing information.

The provision information acquisition unit 122 acquires provision information. The acquired provision information is delivered to the management unit 113, stored in the provision information storage unit 188 secured in the storage unit, and managed. The storage control unit 123 executes control for storing the acquired provision information in the generative AI processing device 6. For example, the storage control unit 123 may cause the provision information to be transmitted to the generative AI processing device 6 via the transmission control unit 121.

The designation information acquisition unit 124 acquires designation information. The acquired designation information is delivered to the management unit 113, stored in the designation information storage unit 189 secured in the storage unit, and managed.

The first prompt generation unit 125 generates a first prompt, based on the acquired designation information. The first prompt generation unit 125 also generates a first prompt for executing processing to generate related information from structured provision information. The related information generation unit 126 executes processing for generating related information. Specifically, in the related information generation unit 126, a generation processing execution unit 1261 functioning as a generation processing execution module and a related information acquisition unit 1262 functioning as a related information acquisition module operate. The generation processing execution unit 1261 causes the generative AI processing device 6 to execute processing for generating related information based on the first prompt. For example, the generation processing execution unit 1261 may cause the first prompt to be transmitted to the generative AI processing device 6 via the transmission control unit 121. In this case, the first prompt may be transmitted via the chat server 5. The related information acquisition unit 1262 acquires the related information generated by the generative AI processing device 6. The acquired related information is delivered to the management unit 113, stored in the related information storage unit 190 secured in the storage unit, and managed.

The second prompt generation unit 127 generates a second prompt, based on the acquired designation information and the generated and acquired related information. The support information generation unit 128 executes processing for generating support information. Specifically, in the support information generation unit 128, a generation processing execution unit 1281 functioning as a generation processing execution module and a support information acquisition unit 1282 functioning as a support information acquisition module operate. The generation processing execution unit 1281 causes the generative AI processing device 6 to execute processing for generating support information based on the second prompt. For example, the generation processing execution unit 1281 may cause the second prompt to be transmitted to the generative AI processing device 6 via the transmission control unit 121. In this case, the second prompt may be transmitted via the chat server 5. The support information acquisition unit 1282 acquires the support information generated by the generative AI processing device 6. The acquired support information is delivered to the management unit 113, stored in the support information storage unit 191 secured in the storage unit, and managed.

The third prompt generation unit 129 generates a third prompt based on the acquired provision information. The structured provision information generation unit 130 executes processing for generating structured provision information in the generative AI processing device 6. Specifically, in the structured provision information generation unit 130, a generation processing execution unit 1301 functioning as a generation processing execution module and a structured provision information acquisition unit 1302 functioning as a support information acquisition module operate. The generation processing execution unit 1301 causes the generative AI processing device 6 to execute processing for generating structured provision information based on the third prompt. For example, the generation processing execution unit 1301 may cause the third prompt to be transmitted to the generative AI processing device 6 via the transmission control unit 121. In this case, the third prompt may be transmitted via the chat server 5. The structured provision information acquisition unit 1302 acquires the structured provision information generated by the generative AI processing device 6. The acquired structured provision information is delivered to the management unit 113, stored in the structured provision information storage unit 192 secured in the storage unit, and managed.

The support information provision unit 131 executes processing for providing the generated support information to the user. For example, the support information provision unit 131 may cause the support information to be transmitted to the user terminal 2 via the transmission control unit 121.

### (Functional Configuration of Generative AI Processing Device)

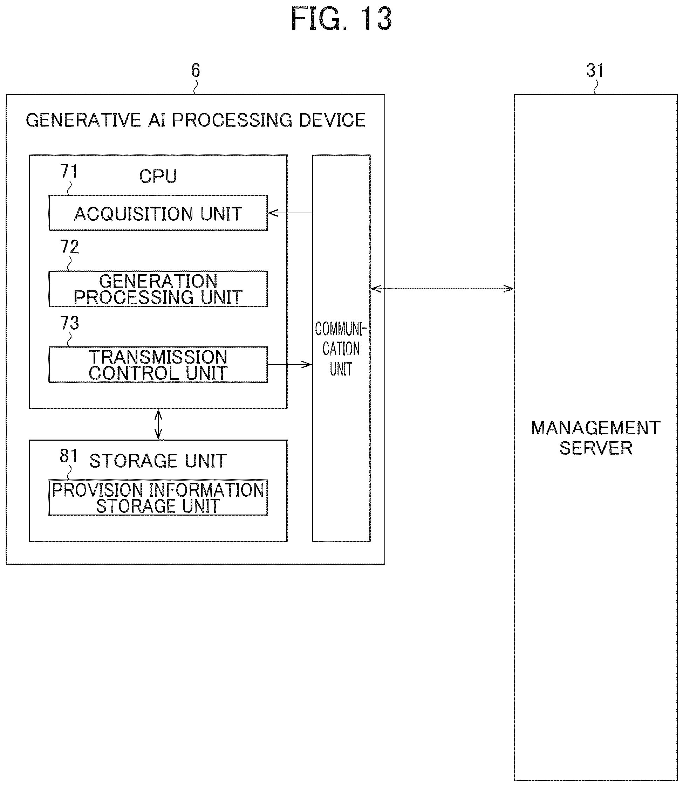

FIG. 13 is a functional block diagram illustrating an example of a functional configuration in the generative AI processing device 6. When operating, the CPU of the generative AI processing device 6 functions as an acquisition unit 71, a generation processing unit 72, and a transmission control unit 73. In the storage unit of the generative AI processing device 6, a provision information storage unit 81 is secured for storing information.

The acquisition unit 71 acquires various types of information. For example, the acquisition unit 71 acquires various types of information transmitted from the management server 31 and other external sources. The acquisition unit 71 also acquires provision information transmitted from the management server 31. The acquired provision information is stored and managed in the provision information storage unit 81 secured in the storage unit under control of the management server 31. The acquisition unit 71 also acquires the first prompt transmitted from the management server 31. The acquisition unit 71 also acquires the second prompt transmitted from the management server 31. The acquisition unit 71 also acquires the third prompt transmitted from the management server 31. In this manner, the acquisition unit 71 handles information reception by the communication unit.

The generation processing unit 72 executes generative AI processing based on prompts, which are instructions from the management server 31, and generates various types of information as results. For example, the generation processing unit 72 executes generative AI processing based on the first prompt transmitted from the management server 31, and generates related information as a result. The generation processing unit 72 also executes generative AI processing based on the second prompt transmitted from the management server 31, and generates support information as a result. The generation processing unit 72 further executes generative AI processing based on the third prompt transmitted from the management server 31, and generates structured provision information as a result.

The transmission control unit 73 controls transmission of various types of information to the management server 1 and other external destinations via the communication unit. For example, the transmission control unit 73 controls transmission of the related information to the management server 31. The transmission control unit 73 also controls transmission of the support information to the management server 31. The transmission control unit 73 further controls transmission of the structured provision information to the management server 31.

### <Processing Flow>

### (Processing Flow of Management Server)

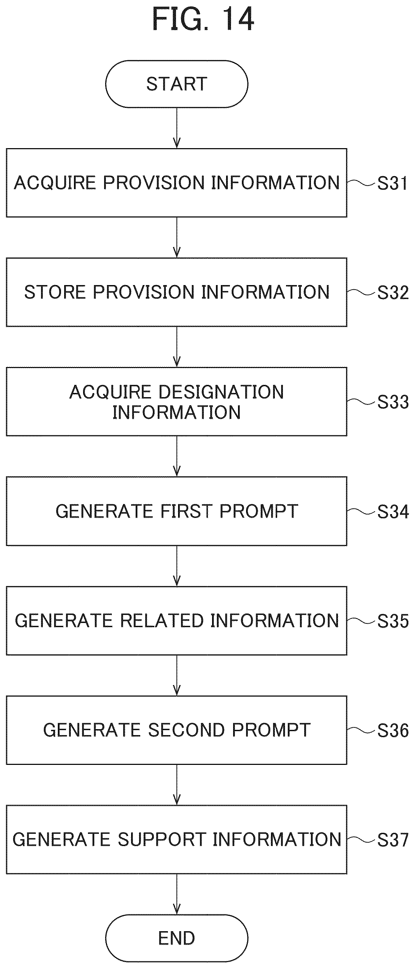

FIG. 14 is a flowchart illustrating an example of support information generation processing. This processing realizes the provision information acquisition unit 122, the storage control unit 123, the designation information acquisition unit 124, the first prompt generation unit 125, the related information generation unit 126, the second prompt generation unit 127, and the support information generation unit 128.

The CPU of the management server 31 acquires provision information (Step S31). Thereafter, the CPU of the management server 31 executes control to store the acquired provision information in the generative AI processing device 6 (Step S32).

Next, the CPU of the management server 31 acquires designation information (Step S33). Thereafter, the CPU of the management server 31 generates a first prompt based on the acquired designation information (Step S34). Thereafter, the CPU of the management server 31 executes processing for generating related information (Step S35). Specifically, the CPU of the management server 31 causes the generative AI processing device 6 to execute processing for generating related information based on the first prompt, and acquires the generated related information.

Next, the CPU of the management server 31 generates a second prompt based on the designation information and the generated and acquired related information (Step S36). Thereafter, the CPU of the management server 31 executes processing for generating support information (Step S37). Specifically, the CPU of the management server 31 causes the generative AI processing device 6 to execute processing for generating support information based on the second prompt, and acquires the generated support information. After acquiring the support information, the support information generation processing ends.

### <Specific Example>

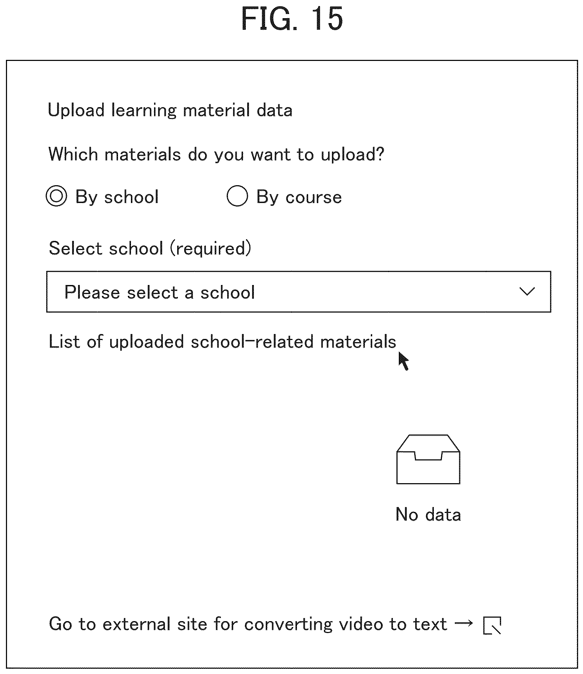

FIG. 15 is a diagram illustrating a specific example of a screen displayed on the user terminal 2 that uses a service (hereinafter, referred to as "the service") to which the information processing system S200 is applied. The service is a service that provides courses that can be taken by a user to achieve an objective of predetermined content. The user who uses the service uploads provision information from the user terminal 2. The upload destination of the provision information is the management server 31. FIG. 15 illustrates an example of a screen displayed on the user terminal 2 when the user uploads "learning material data" as provision information.

In the screen illustrated in FIG. 15, buttons for selecting whether to upload learning material data "by school" or learning material data "by course" as a menu for uploading learning material data, and buttons for individually selecting schools or courses (a school in the example of FIG. 15) are displayed.

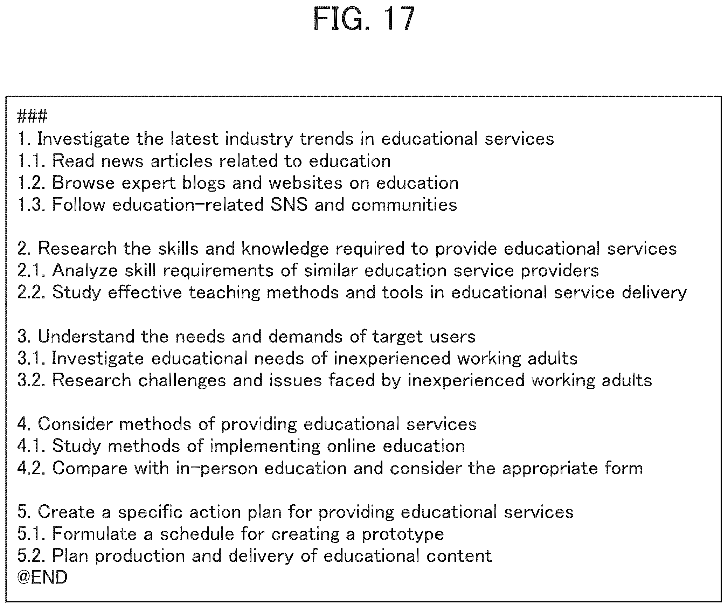

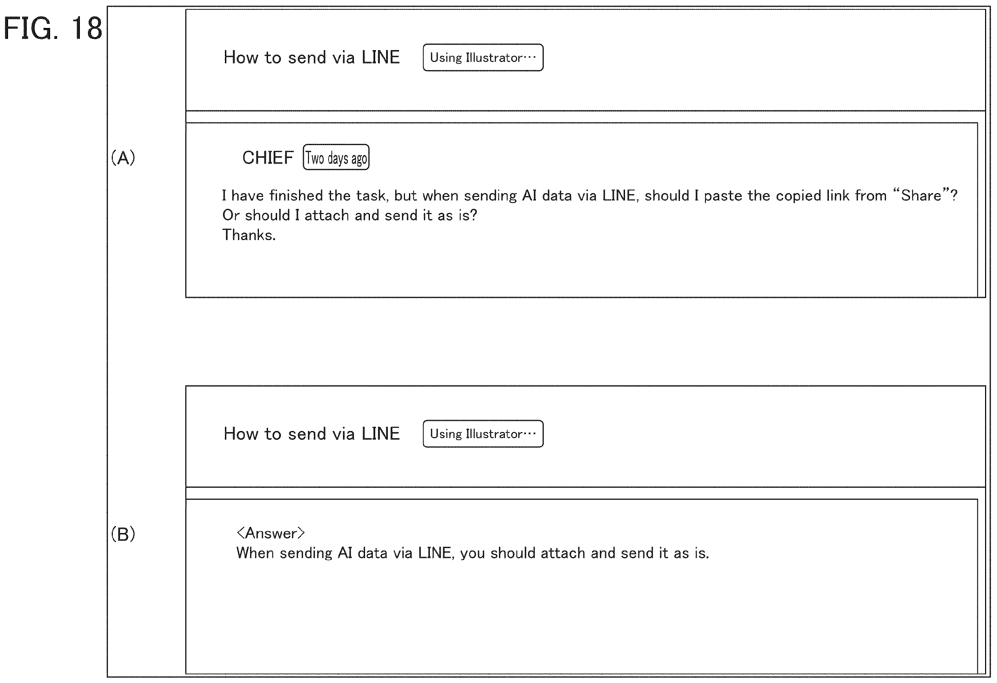

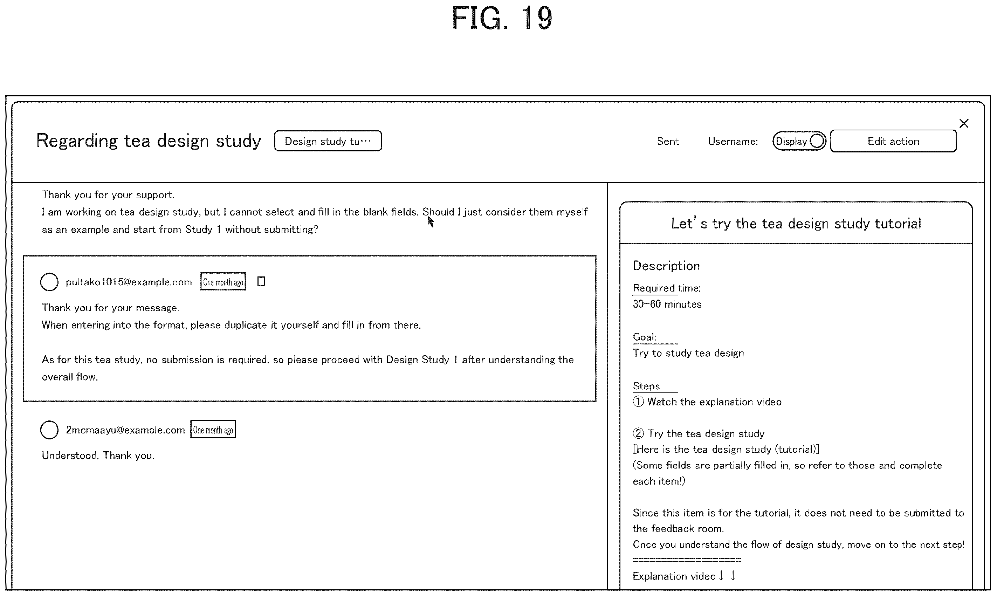

FIGS. 16 to 19 are diagrams illustrating specific examples of provision information uploaded from the screen of FIG. 14 described above. FIG. 16 illustrates a framework of a quick reference table as an example of the provision information. FIG. 17 illustrates processes as an example of the provision information. FIG. 18(A) illustrates a user's question as an example of the provision information. FIG. 18(B) illustrates an answer to the question as an example of the provision information. FIG. 19 illustrates a chat flow as an example of the provision information. The chat flow illustrated in FIG. 19 is an example of a screen displayed on the instructor terminal 3.

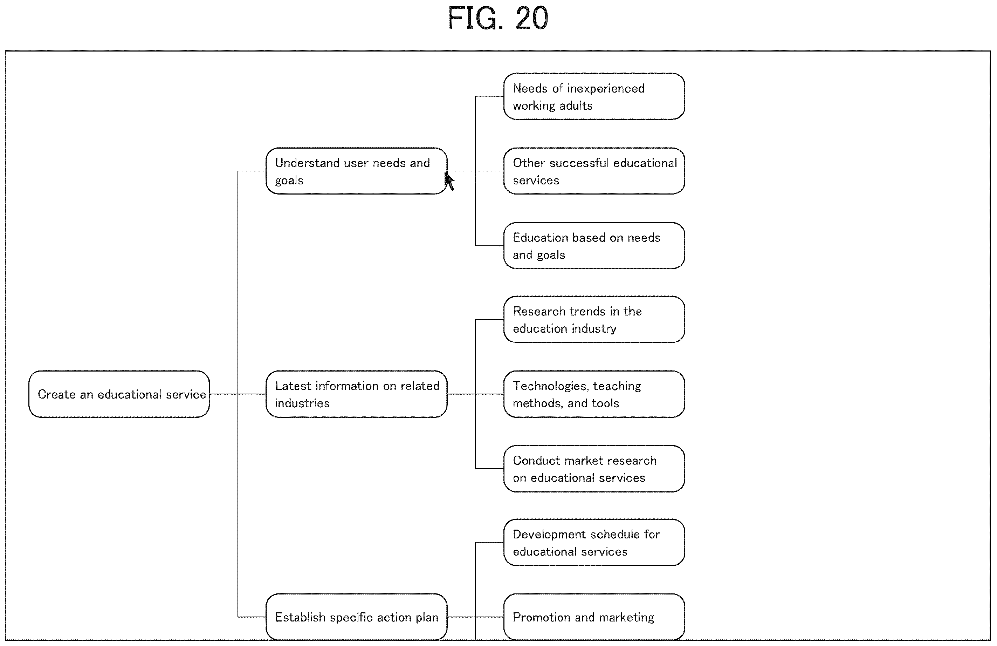

FIGS. 20 to 26 are diagrams illustrating specific examples of support information generated by the generative AI processing device 6. FIG. 20 illustrates an example of a quick reference table as a specific example of the support information generated by the generative AI processing device 6. In the quick reference table illustrated in FIG. 20, a plurality of examples of processes generated based on the user's objectives and needs are shown.

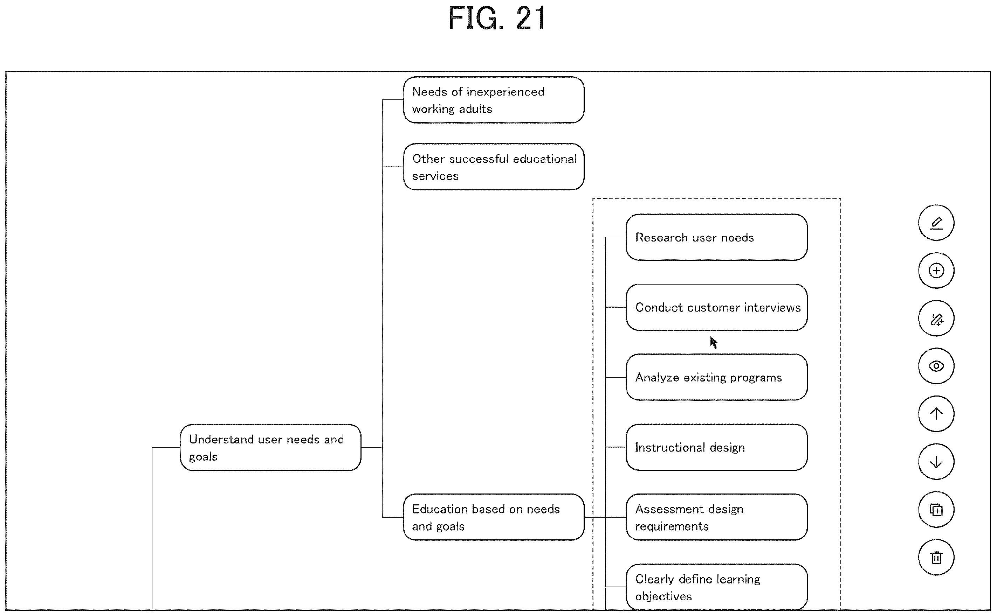

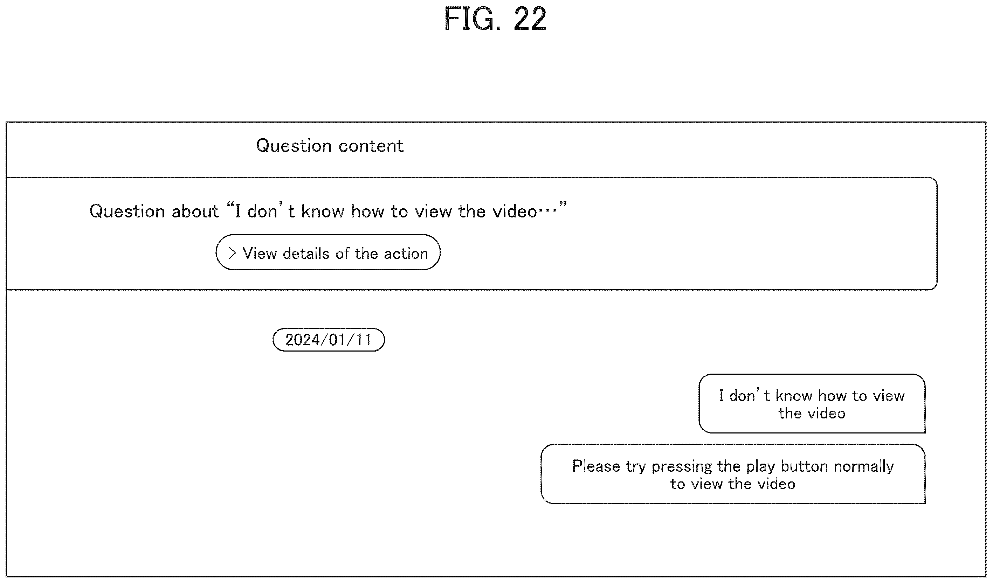

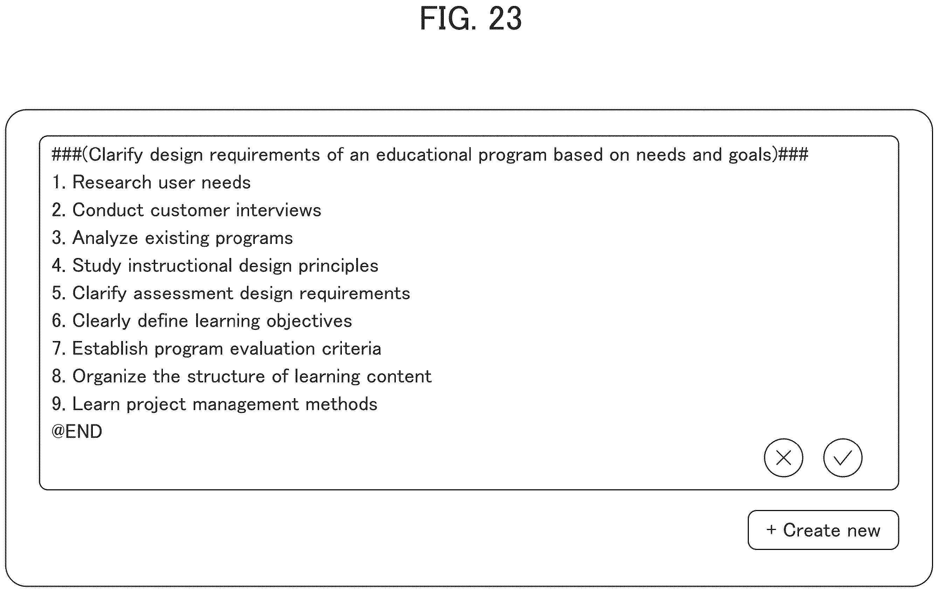

FIG. 21 illustrates an example of a refined quick reference table as a specific example of the support information generated by the generative AI processing device 6. In the quick reference table illustrated in FIG. 21, an example is shown in which processes have been added (dashed region). FIG. 22 illustrates an example of an answer to a question as a specific example of the support information generated by the generative AI processing device 6. FIG. 23 illustrates an example of a plurality of processes as a specific example of the support information generated by the generative AI processing device 6.

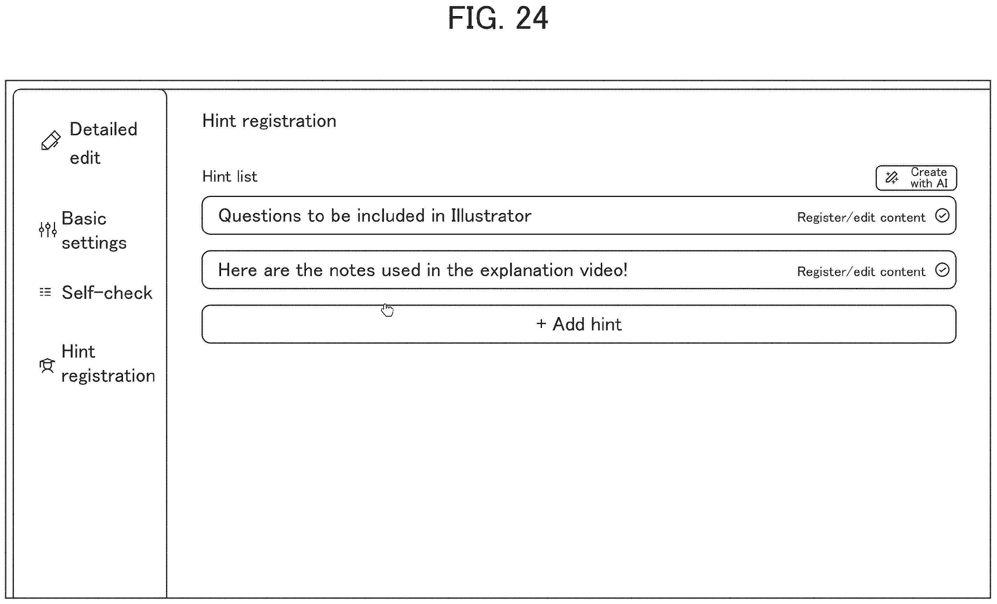

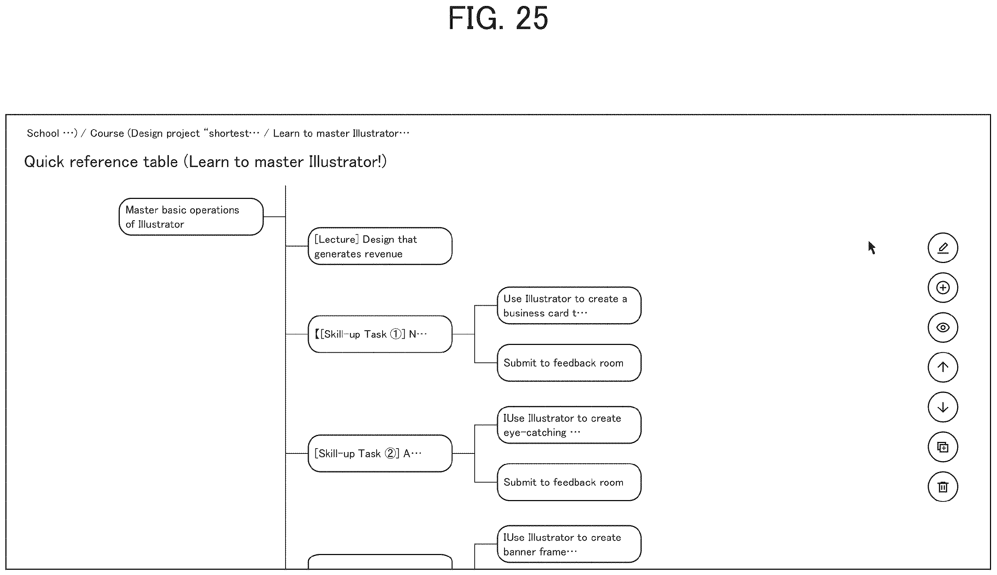

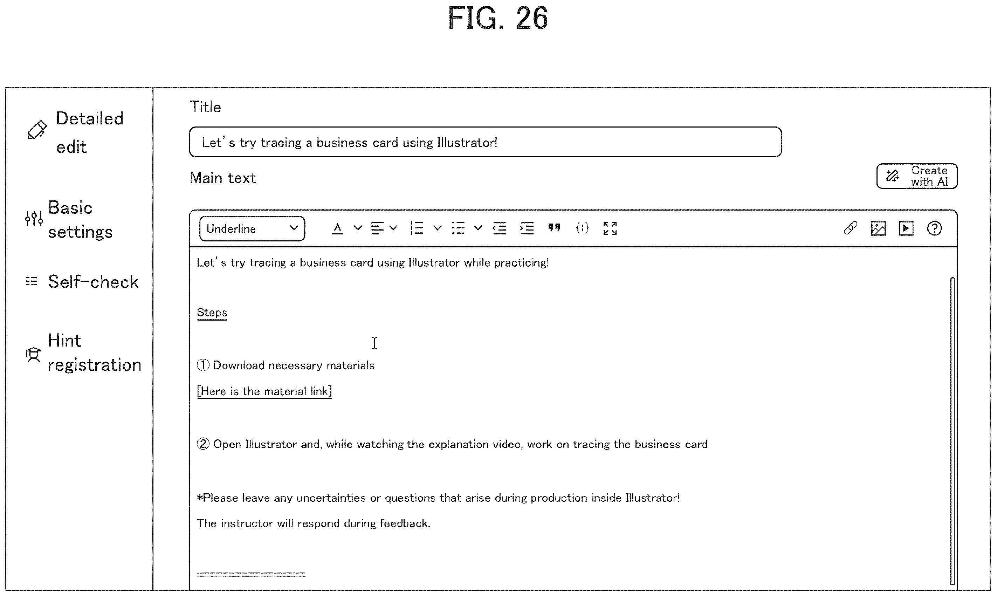

FIG. 24 illustrates an example of a hint as a specific example of the support information generated by the generative AI processing device 6. FIG. 25 illustrates an example of a self-check point as a specific example of the support information generated by the generative AI processing device 6. FIG. 26 illustrates an example of advice for a self-check point as a specific example of the support information generated by the generative AI processing device 6.

### <Advantageous Effects of the Second Embodiment>

According to the second embodiment, in terms of generation of support information by generative AI, a framework of a quick reference table or the quick reference table itself can be generated. In addition, highly accurate answers to questions from users can be obtained. The obtained answers may include subdivision of processes. Accordingly, manual work of subdividing processes as in the prior art is unnecessary. The obtained answers may be plural, and the user may select from among the plurality of answers. Automatic determination of dependencies among the processes is also possible. As a result, users who take courses to achieve their objectives can more efficiently achieve their objectives by utilizing the support information generated using the generative AI.

### <Other Embodiments>

Although the embodiments of the present invention have been described above, the present invention is not limited to the above-described embodiments, and modifications and improvements within a range in which the object of the present invention can be achieved are included in the present invention.

For example, in the above-described embodiments, support is provided for enabling a user taking a course to achieve the user's objective, but the invention is not limited thereto. The present invention can be applied to any business or field. For example, the present invention can also be applied to various types of training for companies as customers, thereby leading to revenue.

The series of processing described above can be executed by hardware or can be executed by software. In other words, the functional configurations described above are merely examples and are not particularly limited. That is, it is sufficient that the information processing system has functions of executing the series of processing as a whole, and the functional blocks used to realize the functions are not particularly limited to the examples described above.

A location of the functional blocks is also not particularly limited and may be arbitrary. For example, the functional blocks of the management server 1 may be transferred to another device, or the functional blocks of another device may be transferred to a server. A single functional block may be configured only by hardware, only by software, or by a combination thereof.

When the series of processing is executed by software, a program configuring the software is installed in a computer or the like from a network or a recording medium. The computer may be incorporated in dedicated hardware. The computer may also be a general-purpose smartphone or personal computer, as well as a server, capable of executing various functions by installing various programs.

A recording medium including such a program is configured not only by a removable medium (not illustrated) separately distributed from a main body of the device to provide the program to a user or the like, but also by a recording medium provided to a user or the like in a state of being incorporated in the main body of the device in advance. Since the program can be distributed via a network, the recording medium may be mounted in or accessible by a computer connected or connectable to the network.

In the present specification, steps describing a program recorded in a recording medium include processing executed in chronological order according to the sequence, as well as processing not necessarily executed chronologically but executed in parallel or individually. In the present specification, the term "system" refers to an overall device composed of a plurality of devices or a plurality of units.

In other words, the information processing system to which the present invention is applied can take various embodiments having the following configuration.
(1-1) That is, it is sufficient that the information processing system to which the present invention is applied (for example, the information processing system S200 of FIG. 11) includes:
   a provision information acquisition unit (for example, the provision information acquisition unit 122 of FIG. 12) configured to acquire provision information that can be provided to a user in a course that can be taken by the user in order to achieve an objective of predetermined content;
   a designation information acquisition unit (for example, the designation information acquisition unit 124 of FIG. 12) configured to acquire designation information that designates support information for supporting taking of the course;
   a first prompt generation unit (for example, the first prompt generation unit 125 of FIG. 12) configured to generate a first prompt for executing processing to generate related information associated with the support information from the provision information, based on the designation information;
   a related information generation unit (for example, the related information generation unit 126 of FIG. 12) configured to generate the related information, based on the first prompt;
   a second prompt generation unit (for example, the second prompt generation unit 127 of FIG. 12) configured to generate a second prompt for executing processing to generate the support information, based on the designation information and the related information; and
   a support information generation unit (for example, the support information generation unit 128 of FIG. 12) configured to generate the support information, based on the second prompt.
(1-2) The information processing system may further include: a third prompt generation unit (for example, the third prompt generation unit 129 of FIG. 12) configured to generate a third prompt for executing processing to generate structured provision information obtained by structuring the provision information, based on the provision information acquired by the provision information acquisition unit; and a structured provision information generation unit (for example, the structured provision information generation unit 130 of FIG. 12) configured to generate the structured provision information, based on the third prompt. The first prompt generation unit generates the first prompt for executing processing to generate the related information from the structured provision information.
(1-3) The related information generation unit may cause an information processing device (for example, the generative AI processing device 6 of FIG. 11) that executes processing to generate an output in natural language, based on an acquired prompt and stored predetermined information (for example, the provision information), to generate the related information.
(1-4) The information processing system may further include: a support information provision unit (for example, the support information provision unit 131 of FIG. 12) configured to provide the support information to the user.
(1-5) The provision information may include at least one of teaching material used in the course, a framework of a process chart indicating a path of action until the user achieves the objective and an action to be taken along the path, an action to be taken by the user, a question from the user and an answer to the question, or a chat flow in which the user has participated.
(1-6) The objective may be at least one of creation of a quick reference table, refinement of a quick reference table, a question and an answer to the question, creation of an action to be taken by the user, creation of a hint for the user, creation of a self-check point, or creation of advice for a self-check point.
(1-7) The information processing system may further include: a stem generation unit (for example, the stem generation unit 115 of FIG. 12) configured to generate, as part of a process chart, a stem route showing a plurality of processes indicating a path of action until a user achieves an objective and an action to be taken along the path;
   a specification unit (for example, the specification unit 116 of FIG. 12) configured to specify, on the stem route, a difficult process that becomes difficult for the user taking an action along the stem route; and
   a branch generation unit (for example, the branch generation unit 117 of FIG. 12) configured to generate, on the process chart, a branch route serving as a detour for passing through the difficult process and including at least one process.
(1-8) The branch generation unit may arrange a plurality of processes in the branch route corresponding to the difficult process on the stem route.
(1-9) The branch generation unit may generate a plurality of branch routes when assuming defects occurring in the difficult process in a case where a plurality of assumed defects exist.
(1-10) The stem generation unit and the branch generation unit may generate at least one process in association with time information indicating a period until the user takes an action indicated by the process.
(1-11) The information processing system may further include: a record information acquisition unit (for example, the reception control unit 111 of FIG. 12) configured to acquire action record information indicating a record of an action taken for the objective by an achiever who has achieved the objective. The specification unit specifies a difficult process by referring to the action record information, specifying a route taken by each achiever until achieving the objective, and specifying the difficult process, based on differences among the specified routes.
(1-12) The information processing system may further include:
   a record information acquisition unit configured to acquire action record information indicating a record of an action taken for the objective by an achiever who has achieved the objective. The stem generation unit generates the stem route by referring to the action record information and specifying a route taken by each achiever until achieving the objective, and generates the stem route, based on the specified route.
(1-13) The stem generation unit may specify the shortest route among the routes specified for each achiever and generate the stem route based on the shortest route.
(1-14) The stem generation unit may extract a common process included in a route specified for each achiever, specify a route including the extracted common process as a common route, and generate the stem route based on the specified common route.
(1-15) The stem generation unit may calculate a transition ratio between processes included in a route specified for each achiever, and generate the stem route based on the calculated transition ratio.
(1-16) The stem generation unit may generate the stem route including processes between which the transition ratio is maximum.
(1-17) The stem generation unit may update the stem route after creating the stem route, based on the transition ratio. The branch generation unit may update the branch route in accordance with the update of the stem route by the stem generation unit.
(1-18) The specification unit may specify a process to be set as a difficult process, based on a ratio of a difference occurring in a process that causes differences among the routes.
(1-19) In an information processing method executed by an information processing system, the method may include the steps of:
   acquiring provision information that can be provided to a user in a course that can be taken by the user in order to achieve an objective of predetermined content;
   acquiring designation information that designates support information for supporting taking of the course;
   generating a first prompt for executing processing to generate related information associated with the support information from the provision information, based on the designation information;
   generating the related information, based on the first prompt; generating a second prompt for executing processing to generate the support information, based on the designation information and the related information; and
   generating the support information, based on the second prompt.
(1-20) A program may cause an information processing system to execute processing including:
   acquiring provision information that can be provided to a user in a course that can be taken by the user in order to achieve an objective of predetermined content;
   acquiring designation information that designates support information for supporting taking of the course;
   generating a first prompt for executing processing to generate related information associated with the support information from the provision information, based on the designation information;
   generating the related information, based on the first prompt; generating a second prompt for executing processing to generate the support information, based on the designation information and the related information; and
   generating the support information, based on the second prompt.
(2-1) It is sufficient that the information processing system to which the present invention is applied (for example, the information processing system S200 of FIG. 11) includes:
   a first receiving unit (for example, the reception control unit 111 of FIG. 12) configured to receive a first message for an inquiry created by a user, the first message being transmitted from a user terminal operated by the user who takes actions along a process chart including a stem route indicating a path of action until achieving an objective and at least one branch route branching from and returning to the stem route; and
   a process chart update unit (for example, the quick reference table update unit 119 of FIG. 12) configured to update the process chart based on the first message.
(2-2) The process chart update unit may update the process chart by specifying a process on the process chart in which the inquiry by the first message was made and performing one of dividing the specified process, adding a branch route, and appending reference material.
(2-3) The information processing system may further include: a second receiving unit (for example, the reception control unit 111 of FIG. 12) configured to receive a second message created by an operator as an answer to the first message, the second message being transmitted from an operator terminal operated by the operator. The process chart update unit may: specify a process on the process chart in which an inquiry by the first message was made; associate the specified process; and update the process chart so that the existence of the first message and the second message can be visually recognized.
(2-4) The first receiving unit and the second receiving unit are respectively capable of receiving the first message and the second message as voice data. The process chart update unit may convert the voice data into text data and associate the text data with the specified process.
(2-5) The information processing system may further include: a provision information acquisition unit configured to acquire provision information that can be provided to a user in a course that can be taken by the user in order to achieve an objective of predetermined content;
   a designation information acquisition unit configured to acquire designation information that designates support information for supporting taking of the course;
   a first prompt generation unit configured to generate a first prompt for executing processing to generate related information associated with the support information from the provision information, based on the designation information;
   a related information generation unit configured to generate the related information, based on the first prompt;
   a second prompt generation unit configured to generate a second prompt for executing processing to generate the support information, based on the designation information and the related information; and
   a support information generation unit configured to generate the support information, based on the second prompt.
(2-6) The information processing system may further include: a third prompt generation unit configured to generate a third prompt for executing processing to generate structured provision information obtained by structuring the provision information, based on the provision information acquired by the provision information acquisition unit; and
   a structured provision information generation unit configured to generate the structured provision information, based on the third prompt. The first prompt generation unit may generate the first prompt for executing processing to generate the related information from the structured provision information.
(2-7) The related information generation unit may cause an information processing device that executes processing to generate an output in natural language, based on an acquired prompt and stored predetermined information, to generate the related information.
(2-8) The information processing system may further include: a support information provision unit configured to provide the support information to the user.
(2-9) The provision information may include at least one of teaching material used in the course, a framework of a process chart indicating a path of action until the user achieves the objective and an action to be taken along the path, an action to be taken by the user, a question from the user and an answer to the question, or a chat flow in which the user has participated.
(2-10) The objective may be at least one of creation of a quick reference table, refinement of a quick reference table, a question and an answer to the question, creation of an action to be taken by the user, creation of a hint for the user, creation of a self-check point, or creation of advice for a self-check point.
(2-11) In an information processing method executed by an information processing system, the method may include the steps of:
   receiving a first message for an inquiry created by a user, the first message being transmitted from a user terminal operated by the user who takes actions along a process chart including a stem route indicating a path of action until achieving an objective and at least one branch route branching from and returning to the stem route; and
   updating the process chart based on the first message.
(2-12) A program may cause an information processing system to execute processing including: receiving a first message for an inquiry created by a user, the first message being transmitted from a user terminal operated by the user who takes actions along a process chart including a stem route indicating a path of action until achieving an objective and at least one branch route branching from and returning to the stem route; and
   updating the process chart based on the first message.
(3-1) It is sufficient that the information processing system (for example, the information processing system S100 of FIG. 1), to which the present invention is applied, includes: a stem generation unit (for example, the stem generation unit 115 of FIG. 3) configured to generate, as part of a process chart, a stem route showing a plurality of processes indicating a path of action until a user achieves an objective and an action to be taken along the path;
   a specification unit (for example, the specification unit 116 of FIG. 3) configured to specify, on the stem route, a difficult process that becomes difficult for the user taking an action along the stem route; and
   a branch generation unit (for example, the branch generation unit 117 of FIG. 3) configured to generate, on the process chart, a branch route serving as a detour for passing through the difficult process and including at least one process.
(3-2) The branch generation unit may arrange a plurality of processes in the branch route corresponding to the difficult process on the stem route.
(3-3) The branch generation unit may generate a plurality of branch routes when assuming defects occurring in the difficult process in a case where a plurality of assumed defects exist.
(3-4) The stem generation unit and the branch generation unit may generate at least one process in association with time information indicating a period until the user takes an action indicated by the process.
(3-5) The information processing system may further include: a record information acquisition unit (for example, the reception control unit 111 of FIG. 3) configured to acquire action record information indicating a record of an action taken for the objective by an achiever who has achieved the objective. The specification unit may specify a difficult process by referring to the action record information, specifying a route taken by each achiever until achieving the objective, and specifying the difficult process, based on differences among the specified routes.
(3-6) The information processing system may further include: a record information acquisition unit configured to acquire action record information indicating a record of an action taken for the objective by an achiever who has achieved the objective. The stem generation unit generates the stem route by referring to the action record information and specifying a route taken by each achiever until achieving the objective, and generates the stem route, based on the specified route.
(3-7) The stem generation unit may specify the shortest route among the routes specified for each achiever and generate the stem route based on the shortest route.
(3-8) The stem generation unit may extract a common process included in a route specified for each achiever, specify a route including the extracted common process as a common route, and generate the stem route based on the specified common route.
(3-9) The stem generation unit may calculate a transition ratio between processes included in a route specified for each achiever, and generate the stem route based on the calculated transition ratio.
(3-10) The stem generation unit may generate the stem route including processes between which the transition ratio is maximum.
(3-11) The stem generation unit may update the stem route after creating the stem route, based on the transition ratio. The branch generation unit may update the branch route in accordance with the update of the stem route by the stem generation unit.
(3-12) The specification unit may specify a process to be set as a difficult process, based on a ratio of a difference occurring in a process that causes differences among the routes.
(3-13) A program may cause an information processing system to execute processing including:
   generating, as part of a process chart, a stem route showing a plurality of processes indicating a path of action until a user achieves an objective and an action to be taken along the path;
   specifying, on the stem route, a difficult process that becomes difficult for the user taking an action along the stem route; and
   generating, on the process chart, a branch route serving as a detour for passing through the difficult process and including at least one process.
(4-1) It is sufficient that the information processing system (for example, the information processing system S100 of FIG. 1), to which the present invention is applied, includes: a first receiving unit (for example, the reception control unit 111 of FIG. 3) configured to receive a first message for an inquiry created by a user, the first message being transmitted from a user terminal operated by the user who takes actions along a process chart including a stem route indicating a path of action until achieving an objective and at least one branch route branching from and returning to the stem route; and
   a process chart update unit (for example, the quick reference table update unit 119 of FIG. 3) configured to update the process chart based on the first message.
(4-2) The process chart update unit may update the process chart by specifying a process on the process chart in which the inquiry by the first message was made and performing one of dividing the specified process, adding a branch route, and appending reference material.
(4-3) The information processing system may further include: a second receiving unit (for example, the reception control unit 111 of FIG. 3) configured to receive a second message created by an operator as an answer to the first message, the second message being transmitted from an operator terminal operated by the operator. The process chart update unit may: specify a process on the process chart in which an inquiry by the first message was made; associate the specified process; and update the process chart so that the existence of the first message and the second message can be visually recognized.
(4-4) The first receiving unit and the second receiving unit are respectively capable of receiving the first message and the second message as voice data. The process chart update unit may convert the voice data into text data and associate the text data with the specified process.
(4-5) A program may cause an information processing apparatus to execute processing including:
   receiving a first message for an inquiry created by a user, the first message being transmitted from a user terminal operated by the user who takes actions along a process chart including a stem route indicating a path of action until achieving an objective and at least one branch route branching from and returning to the stem route; and
   updating the process chart based on the first message.

### EXPLANATION OF REFERENCE NUMERALS

- 1, 31:: management server
- 2:: user terminal
- 3:: instructor terminal
- 4:: mail server
- 5:: chat server
- 6:: generative AI processing device
- 11:: CPU
- 16:: output unit
- 17:: input unit
- 18:: storage unit
- 19:: communication unit
- 51:: acquisition unit
- 52:: display control unit
- 53:: transmission control unit
- 61:: acquisition unit
- 62:: display control unit
- 63:: transmission control unit
- 71:: acquisition unit
- 72:: generation processing unit
- 73:: transmission control unit
- 111:: reception control unit
- 112:: authentication unit
- 113:: management unit
- 114:: route analysis unit
- 115:: stem generation unit
- 116:: specification unit
- 117:: branch generation unit
- 118:: additional information generation unit
- 119:: quick reference table update unit
- 120:: screen generation unit
- 121:: transmission control unit
- 122:: provision information acquisition unit
- 123:: storage control unit
- 124:: designation information acquisition unit
- 125:: first prompt generation unit
- 126:: related information generation unit
- 127:: second prompt generation unit
- 128:: support information generation unit
- 129:: third prompt generation unit
- 130:: structured provision information generation unit
- 131:: support information provision unit
- S:: information processing system
- N:: network

## Claims

1. An information processing system, comprising:
a provision information acquisition unit configured to acquire provision information that can be provided to a user in a course that can be taken by the user in order to achieve an objective of predetermined content;
a designation information acquisition unit configured to acquire designation information that designates support information for supporting taking of the course;
a first prompt generation unit configured to generate a first prompt for executing processing to generate related information associated with the support information from the provision information, based on the designation information;
a related information generation unit configured to generate the related information, based on the first prompt;
a second prompt generation unit configured to generate a second prompt for executing processing to generate the support information, based on the designation information and the related information; and
a support information generation unit configured to generate the support information, based on the second prompt.

2. The information processing system according to claim 1, further comprising:
a third prompt generation unit configured to generate a third prompt for executing processing to generate structured provision information obtained by structuring the provision information, based on the provision information acquired by the provision information acquisition unit; and
a structured provision information generation unit configured to generate the structured provision information, based on the third prompt,
wherein the first prompt generation unit generates the first prompt for executing processing to generate the related information from the structured provision information.

3. The information processing system according to claim 2, wherein the related information generation unit causes an information processing device that executes processing to generate an output in natural language to generate the related information, based on an acquired prompt and stored predetermined information.

4. The information processing system according to claim 1, further comprising a support information provision unit configured to provide the support information to the user.

5. The information processing system according to claim 1, wherein the provision information includes at least one of teaching material used in the course, a framework of a process chart indicating a path of action until the user achieves the objective and an action to be taken along the path, an action to be taken by the user, a question from the user and an answer to the question, or a chat flow in which the user has participated.

6. The information processing system according to claim 1, wherein the objective is at least one of creation of a quick reference table, refinement of a quick reference table, a question and an answer to the question, creation of an action to be taken by the user, creation of a hint for the user, creation of a self-check point, or creation of advice for a self-check point.

7. The information processing system according to claim 1, further comprising:
a stem generation unit configured to generate, as part of a process chart, a stem route showing a plurality of processes indicating a path of action until a user achieves an objective and an action to be taken along the path;
a specification unit configured to specify, on the stem route, a difficult process that becomes difficult for the user taking an action along the stem route; and
a branch generation unit configured to generate, on the process chart, a branch route serving as a detour for passing through the difficult process and including one or more processes.

8. The information processing system according to claim 7, wherein the branch generation unit arranges a plurality of processes in the branch route corresponding to the difficult process on the stem route.

9. The information processing system according to claim 7, wherein the branch generation unit generates a plurality of branch routes when assuming defects occurring in the difficult process in a case where a plurality of assumed defects exist.

10. The information processing system according to claim 7, wherein the stem generation unit and the branch generation unit generate at least one process in association with time information indicating a period until the user takes an action indicated by the process.

11. The information processing system according to claim 7, further comprising:
a record information acquisition unit configured to acquire action record information indicating a record of an action taken for the objective by an achiever who has achieved the objective,
wherein the specification unit specifies a difficult process by referring to the action record information, specifying a route taken by each achiever until achieving the objective, and specifying the difficult process, based on differences among the specified routes.

12. The information processing system according to claim 7, further comprising:
a record information acquisition unit configured to acquire action record information indicating a record of an action taken for the objective by an achiever who has achieved the objective,
wherein the stem generation unit generates the stem route by referring to the action record information and specifying a route taken by each achiever until achieving the objective, and generates the stem route, based on the specified route.

13. The information processing system according to claim 12, wherein the stem generation unit specifies the shortest route among the routes specified for each achiever and generates the stem route based on the shortest route.

14. The information processing system according to claim 12, wherein the stem generation unit extracts a common process included in a route specified for each achiever, specifies a route including the extracted common process as a common route, and generates the stem route based on the specified common route.

15. The information processing system according to claim 12, wherein the stem generation unit calculates a transition ratio between processes included in a route specified for each achiever, and generates the stem route based on the calculated transition ratio.

16. The information processing system according to claim 15, wherein the stem generation unit generates the stem route including processes between which the transition ratio is maximum.

17. The information processing system according to claim 15, wherein the stem generation unit updates the stem route after creating the stem route, based on the transition ratio, and
the branch generation unit updates the branch route in accordance with the update of the stem route by the stem generation unit.

18. The information processing system according to claim 12, wherein the specification unit specifies a process to be set as a difficult process, based on a ratio of a difference occurring in a process that causes differences among the routes.

19. An information processing method executed by an information processing system, the method comprising:
acquiring provision information that can be provided to a user in a course that can be taken by the user in order to achieve an objective of predetermined content;
acquiring designation information that designates support information for supporting taking of the course;
generating a first prompt for executing processing to generate related information associated with the support information from the provision information, based on the designation information;
generating the related information, based on the first prompt;
generating a second prompt for executing processing to generate the support information, based on the designation information and the related information; and
generating the support information, based on the second prompt.

20. A program for causing an information processing system to execute processing comprising:
acquiring provision information that can be provided to a user in a course that can be taken by the user in order to achieve an objective of predetermined content;
acquiring designation information that designates support information for supporting taking of the course;
generating a first prompt for executing processing to generate related information associated with the support information from the provision information, based on the designation information;
generating the related information, based on the first prompt;
generating a second prompt for executing processing to generate the support information, based on the designation information and the related information; and
generating the support information, based on the second prompt.
